# EUROPEAN PATENT SPECIFICATION

(11) **EP 1 944 684 B1**
(45) Date of publication and mention of the grant of the patent: **13.06.2018**
(21) Application number: 07150139.9
(22) Date of filing: 19.12.2007
(51) Int. Cl.: G06F 3/12, H04L 12/58, H04N 1/00, H04N 1/32, H04L 29/08

(54) **Image forming apparatus, server, data output method, data communication method, and computer program product**
Bilderzeugungsvorrichtung, Server, Datenausgabeverfahren, Datenkommunikationsverfahren und Computerprogrammprodukt
Appareil de formation d'images, serveur, procédé de sortie de données, procédé de communication de données, et produit de programme informatique

(30) Priority: 15.01.2007 JP 2007006315
(43) Date of publication of application: 16.07.2008
(73) Proprietor: Ricoh Company, Ltd., Tokyo 143-8555 (JP)
(72) Inventor: Umehara, Naoki c/o Ricoh Company, Ltd., Tokyo 143-8555 (JP); Asai, Takahiro c/o Ricoh Company, Ltd., Tokyo 143-8555 (JP)
(74) Representative: Schwabe - Sandmair - Marx

(56) References cited:
- US-A1- 2001 029 531
- US-A1- 2003 078 965
- US-A1- 2005 206 947

## Description

### BACKGROUND OF THE INVENTION

### 1. Field of the Invention

The present invention relates to a technology for communicating image data to output the image data.

### 2. Description of the Related Art

A real-time instant messaging technology for communicating messages between information terminal devices such as a personal computer (PC) and a handheld device via a network is conventionally known. By using the technology, users of handheld devices can perform real-time message communication, irrespective of their whereabouts, with other information terminal devices. Moreover, in recent years, due to popularization of handheld devices as a part of the work style, it is difficult to determine when and from what location a user of a handheld device will need to print desired data. Thus, it is necessary that a user is always able to instantly request a printer to print desired data from any location and at any point of time.

During a message communication between a PC and a handheld device, when the user of the handheld device needs data for printing from the PC, the user of the PC can either transmit the data as an attachment to a message or transmit the actual data. Upon receiving the data for printing, the user of the handheld device can instruct a printer to print the data.

Japanese Patent Application Laid-Open No. 2005-173793 discloses a technology in which a user of an information terminal device (i.e., a sender) transmits data for printing, which is needed by another user (recipient), to a print center that keeps a check on the location of each of a plurality of printers (image forming apparatuses). The print center then obtains information about the whereabouts of the recipient from a handheld-device center, which keeps track of the whereabouts of each of a plurality of users of handheld devices. Based on the information about the locations of the printers and the whereabouts of the recipient, the print center determines a printer located within easily accessible distance of the recipient and notifies the recipient about that particular printer. When the recipient selects the notified printer, the print center transmits the data for printing to the selected printer such that the recipient can collect the printed data from the printer.

Japanese Patent Application Laid-Open No. 2004-295440 discloses another technology in which a user of a terminal device (i.e., a sender), who transmits data for printing needed by another user (recipient), selects a printer for printing the data. That is, in this case, the recipient cannot select a printer. The sender first transmits to a print server the data for printing and the destination terminal device (i.e., the terminal device used by the recipient) to which printing status is to be notified. The print server transmits the data for printing to the printer selected by the sender. After the data is printed, the printer notifies the print server that the printing is complete. The print server then identifies the destination terminal device from among a plurality of terminal devices and notifies only the destination terminal device that the printing is complete such that the recipient can collect the printed data from the printer.

Thus, according to a conventional technology, it is necessary to first transmit the data for printing to a print center or a print server. That is, a sender is not able to transmit the data for printing directly to a recipient as a part of message communication, but needs to separately transmit the data to a print center or a print server. Moreover, sometimes a recipient of the data cannot select a desired printer within easily accessible distance. That is, depending on the location of the printer selected by the sender, the recipient might need to go afar to collect the printed data.

Furthermore, according to a conventional technology, real-time message communication is possible only between information terminal devices, but not between an information terminal device and an image forming apparatus. That is, a printer cannot directly transmit to a sender and a recipient a message regarding current printing status of the data. As a result, the sender can confirm the printing status of the data with the recipient only after the recipient has checked the printer for the printing status. Thus, instead of being periodically notified about the current printing status, it becomes the task of a user to confirm the printing status. That makes it difficult for the user to take quick decisions about printing.

US-2001/029531 A1 relates to a wireless remote printing system and method. The remote printing system allows one user to ultimately send a hard copy to another via a portable digital device such as a cellular phone. Upon receiving an e-mail print notice, the portable digital device wirelessly searches an appropriate print station in the vicinity by broadcasting a signal. In response to the broadcasted search signal, the print stations each send information on their printer characteristics such as availability status and print resolution to the portable digital device, a print server or a client that originated the print request. The recipient of the printer characteristic information selects an appropriate print station based upon a predetermined selection rule.

US-2005/206947 A1 relates to an image output system, client terminal device, image output device and image output method. In an image output system in which a client terminal device is connected via a network to an image output device, the client terminal device contains a first transmitting/receiving unit for transmitting/receiving text data containing control information related to an image output by way of an electronic mail, whereas the image output device contains a second transmitting/receiving unit for transmitting/receiving the text data containing the control information related to the image output by way of the electronic mail between the first transmitting/receiving unit and the own second transmitting/receiving unit, and an image output unit for outputting an image based upon an image data file in accordance with the control information which is transmitted/received by the second transmitting/receiving unit.

US-2003/078965 A1 relates to an output management system and method for enabling printing via wireless devices. In this respect, a system and method for managing output such as printing, faxing, and e-mail over various types of computer networks is described. In one aspect, the method provides for printing via a wireless device. The system provides renderable data to the wireless device by which a user-interface may be rendered. The user-interface enables users to select source data and an output device on which the source data are to be printed. The source data are then retrieved from a local or remote store and forwarded to a print service, which renders output image data corresponding to the source data and the output device that was selected. The output image data are then submitted to the output device to be physically rendered. The user-interfaces enable wired and wireless devices to access the system. The system enables documents to be printed by reference, and enables access to resources behind firewalls.

### SUMMARY OF THE INVENTION

The invention is defined by the subject-matter of the independent claims. The dependent claims are directed to advantageous embodiments.

### ADVANTAGES OF THE INVENTION

Advantageously, at least the problems in the conventional technology are partially solved.

Advantageously, a computer program product comprising a computer usable medium having computer readable program codes for data communication embodied in the medium that, when executed, causes a computer to execute: communicating a message with a plurality of destinations via a network, the destinations including an information terminal device and an image forming apparatus; displaying the message on a display unit; receiving selection of image data to be output by the image forming apparatus; generating identification information that uniquely identifies the image data; storing the identification information in a storage unit. The communicating includes reading the identification information from the storage unit to transmit the identification information to the information terminal device.

Advantageously, a computer program product comprising a computer usable medium having computer readable program codes for output instruction embodied in the medium that, when executed, causes a computer to execute: communicating a message with a plurality of destinations via a network, the destinations including an information terminal device and an image forming apparatus; displaying the message; obtaining from the information terminal device identification information that uniquely identifies image data to be output by the image forming apparatus; transmitting the identification information to the image forming apparatus in a contactless manner; and instructing the image forming apparatus to output the image data.

Advantageously, a server that controls communication between a first information terminal device, a second information terminal device, and an image forming apparatus via a network includes: a communication unit that receives from the second information terminal device a second message and identification information that uniquely identifies image data to be output by the image forming apparatus, transmits the second message and the identification information to the first information terminal device, receives a first message from the first information terminal device, transmits the first message to the second information terminal device, receives from the image forming apparatus an output-stats message regarding output status of the image data, and transmits the output-status message to the first information terminal device and the second information terminal device.

Advantageously, a data communication method for controlling communication between a first information terminal device, a second information terminal device, and an image forming apparatus via a network includes: receiving from the second information terminal device a second message and identification information that uniquely identifies image data to be output by the image forming apparatus; transmitting the second message and the identification information to the first information terminal device; receiving a first message from the first information terminal device; transmitting the first message to the second information terminal device; receiving from the image forming apparatus an output-stats message regarding output status of the image data, and transmits the output-status message to the first information terminal device and the second information terminal device.

The above and other features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic diagram of an image forming system according to a first embodiment of the present invention;
Fig. 2 is a schematic diagram of a personal computer (PC) shown in Fig. 1;
Fig. 3 is an example of an instant messenger window displayed on a monitor of the PC;
Fig. 4 is a schematic diagram for explaining a drag-and-drop operation;
Fig. 5 is a schematic diagram of a server shown in Fig. 1;
Fig. 6 is an example of a data structure of a printer information table shown in Fig. 5;
Fig. 7 is an example of a data structure of a user information table shown in Fig. 5;
Fig. 8 is a schematic diagram of a handheld device shown in Fig. 1;
Fig. 9A is an example of a list of destinations displayed on a display unit of the handheld device;
Fig. 9B is an example of an instant messenger screen displayed on the display unit;
Fig. 10 is a schematic diagram of a printer shown in Fig. 1;
Figs. 11A and 11B are sequence diagrams for explaining a process of image formation in the image forming system shown in Fig. 1;
Fig. 12 is an example of a confirmation request displayed on the display unit for transmitting an image-data ID to a printer;
Fig. 13 is examples of messages regarding printing status displayed on the display unit;
Figs. 14A and 14B are sequence diagrams for explaining a process of image formation in an image forming system according to a second embodiment of the present invention;
Fig. 15 is a schematic diagram of a hardware configuration of the PC and the server according to the first and second embodiments; and
Fig. 16 is a schematic diagram of a hardware configuration of the printer according to the first and second embodiments.

### DETAILED DESCRIPTION OF THE PREFERRED EMBODIMENTS

Exemplary embodiments of the present invention are described in detail below with reference to the accompanying drawings. In the following embodiments, an information terminal device is explained, by way of example, as a personal computer (PC) and a handheld device; however, any data-transmittable device with a display screen can be used instead of the PC, while any data-transmittable and portable device with a display screen can be used instead of the handheld device. Similarly, an image forming apparatus is explained as a printer; however, it can be any data-transmittable device having printing functionality such as a copier, a facsimile machine, or a multifunction product (MFP) that combines any or all of the functions of copying, facsimile, and printing.

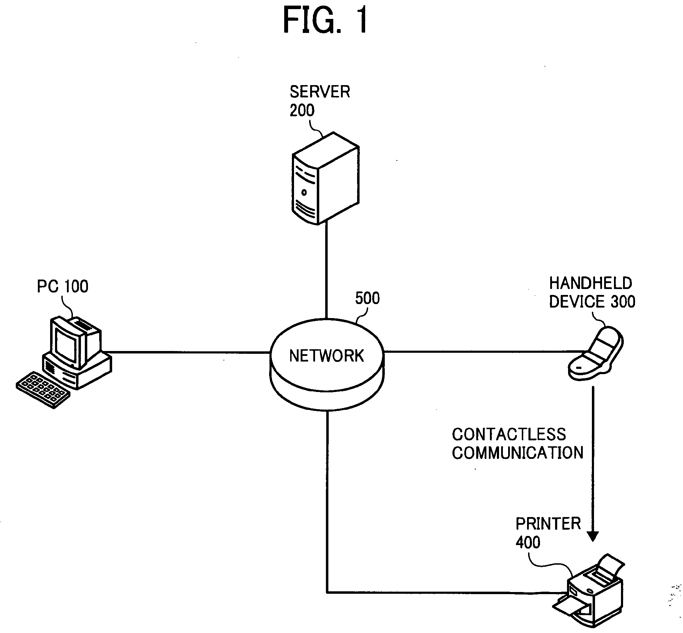

Fig. 1 is a schematic diagram of an image forming system according to a first embodiment of the present invention. The image forming system includes a PC 100, a server 200, a handheld device 300, and a printer 400 connected via a network 500. The PC 100, the handheld device 300, and the printer 400 can communicate various types of data and messages therebetween via the server 200. The PC 100 can transmit to the handheld device 300 data for printing so that the user of the handheld device 300 can obtain a print of the data through the printer 400. Although not shown, the image forming system can include a plurality of PCs, a plurality of handheld devices, and a plurality of printers interconnected via the network 500.

The network 500 can be a wired network such as telephone network, a wireless network, or the Internet interconnecting the PC 100, the server 200, the handheld device 300, and the printer 400.

The data communication between the handheld device 300 and the printer 400 can be performed by using a contactless technology such as FeliCa (registered trademark), which is a contactless integrated circuit (IC) card technology for data communication. The handheld device 300 includes a FeliCa compatible resinous card with an inbuilt nonvolatile memory and a wireless communication chip. Similarly, a FeliCa compatible card reader is inbuilt in the printer 400. The data can be transferred from the handheld device 300 to the printer 400 by placing the handheld device 300 over a FeliCa mark on the printer 400.

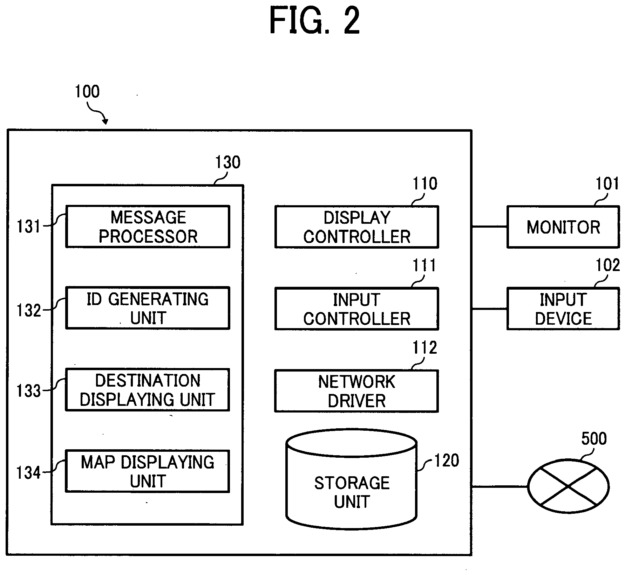

The PC 100 performs message and data communication with the handheld device 300 and the printer 400, and displays thereon the communicated messages. Moreover, when the user of the handheld device needs image data for printing from the PC 100, the user of the PC 100 transmits the image data to the handheld device 300. A data communication program stored in a read only memory (ROM) is executed such that the PC 100 can perform message and data communication. Fig. 2 is a schematic diagram of the PC 100. The PC 100 includes a monitor 101, an input device 102, a display controller 110, an input controller 111, a network driver 112, a storage unit 120, and an instant messenger application 130.

The monitor 101 displays thereon information including characters (text) and images. The input device 102 can be a mouse, a pointing device such as a trackball or a track pad, or a keyboard. A user can use the input device 102 to perform various operations such as a drag-and-drop operation with respect to the information displayed on the monitor 101. A drag-and-drop operation means pressing and holding down the button of the mouse or the pointing device to grab an object on a monitor, dragging the object/cursor/pointing device to a desired location, and dropping the object by releasing the button.

The display controller 110 controls the display of characters and images on the monitor 101. For example, the display controller 110 controls the display of icons or symbols representing image data that the user of the handheld device 300 instructs the printer 400 to print. An icon is a pictographic representation of a type of data or an operation on the monitor 101. A symbol includes an icon, a code, and a character string for representing a type of data or an operation. The input controller 111 controls user input from the input device 102. The network driver 112 controls the connection between the network 500 and the PC 100.

The storage unit 120 is storage medium such as a hard disk drive (HDD) or a memory that stores therein the messages communicated between the handheld device 300 and the printer 400, image-data IDs generated by an ID generating unit 132 described later, and characters and images displayed on the monitor 101.

The instant messenger application 130 is a software application of an instant messaging technology that enables real-time communication in the form of instant messages between the PC 100 and the handheld device 300 via the network 500. The instant messenger application 130 includes a message processer 131, the ID generating unit 132, a destination displaying unit 133, and a map displaying unit 134.

The destination displaying unit 133 displays on the monitor 101 a plurality of destinations with which messages are communicated. Each destination includes an Internet protocol (IP) address of a handheld device and a display name of the user of the handheld device. The display name can be a user name or a screen name. Each display name is linked with the corresponding IP address in advance, and is displayed on the monitor 101. Thus, by specifying a display name as the destination, the IP address linked with the display name, i.e., the IP address of the corresponding handheld device becomes the destination for the messages. The destination displaying unit 133 obtains from the server 200 a plurality of display names, each corresponding to a unique user ID of a user of a handheld device, the IP address of the handheld device, the whereabouts of the user, and the current status of the user. The destination displaying unit 133 also obtains from the server 200 a plurality of printer locations, each corresponding to a unique printer ID of a printer, and the current status of the printers. The destination displaying unit 133 then displays on the monitor 101 the obtained display name of each user, the whereabouts of each user, the current status of each user, the location of each printer, and the current status of each printer. The IP address of each handheld device along with the corresponding display name is stored in a memory.

The current status of a user of a handheld device can be, e.g., "offline", "responsive", and "at work". The "offline" status means that the handheld device is switched off and message communication is not possible. The "responsive" status means that the handheld device is switched on and message communication is possible. The "at work" status means that the handheld device is switched on but message communication is not possible because the user is at work. Similarly, the current mode of a printer can be, e.g., "printable", "offline", and "currently printing". The "printable" mode means that the printer is switched on and in a printable state. The "offline" mode means that the printer is switched off and not in a printable state. The "currently printing" mode means that the printer is switched on but currently printing a print job.

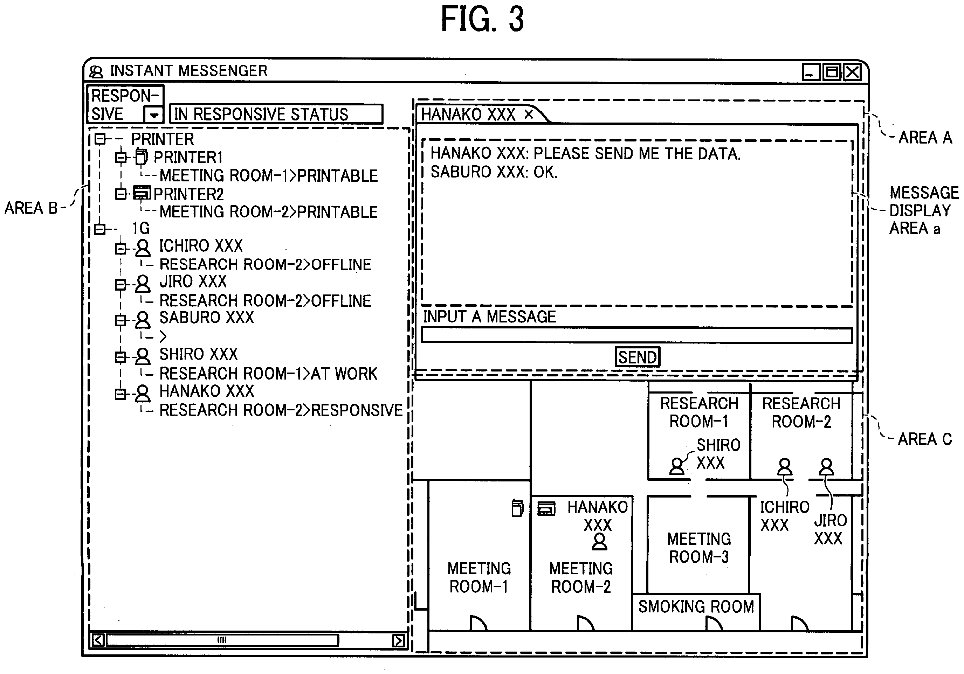

When a user of the PC 100 inputs a message from the input device 102 for a handheld device, the message processer 131 receives the message and displays it on the monitor 101. The message processer 131 then obtains a display name of the handheld device in a transmittable mode to which the user of the PC 100 wants to transmit the displayed message, obtains the IP address corresponding to the display name, and transmits the message to the obtained IP address via the server 200. That is, the message processer 131 transmits all packets of the message to the server 200 that in turns transfers them to the IP address of the specified handheld device. The message processor 131 also receives a message from a handheld device or a printer via the server 200 and displays the message on the monitor 101. The message processor 131 displays all messages, i.e., messages received from the input device 102 and messages received from a handheld device or a printer, in a message display area "a" on the monitor 101. The message display area "a" is described later with reference to Fig. 3.

During a message communication between the PC 100 and a handheld device, when the user of the handheld device needs image data for printing from the PC 100, the message processor 131 transmits to the handheld device an image-data ID in the form of a message. The image-data ID represents the image data for printing, is generated by the ID generating unit 132 described later, and is stored in the storage unit 120. Later, the message processor 131 receives a message from the printer regarding the printing status of the same image data, and displays the message in the message display area "a" on the monitor 101. The printing status indicates, e.g., how many number of sheets are printed, whether the printing is complete, or whether the printing has stooped due to an error. To sum up, in addition to the message communication, the user of the PC 100 and the user of a handheld device can also keep a check on the status of a plurality of printers and communicate therebetween about the status. Such communication facilitates the users in deciding which printer to use for printing at a particular point of time.

In order to transmit an icon representing the image data for printing that the user of a handheld device needs, the user of the PC 100 drags the icon displayed on the monitor 101 and drops it into the message display area "a". Upon detecting the drag-and-drop operation of the icon, the ID generating unit 132 selects the image data corresponding to the icon, generates a unique image-data ID for the image data, and stores the image-data ID in the storage unit 120. When the image data is stored over the Internet, the ID generating unit 132 generates the image-data ID based on the uniform resource locator (URL) of the location at which the image data is stored. In that case, the ID generating unit 132 can, e.g., treat the URL as the image-data ID or generate the image-data ID by adding predetermined alphanumeric characters to the URL.

The map displaying unit 134 receives a map image from a map information table and displays it on the monitor 101. The map image has a specific range of coordinates and indicates locations of a plurality of printers. The map displaying unit 134 also receives coordinate information about the locations of the printers from a printer information table in the server 200, superimposes on the map image an icon of each printer at the respective location based on the coordinate information, and displays the map image on the monitor 101. Similarly, the map displaying unit 134 receives coordinate information about the whereabouts of the users of handheld devices from a user information table in the server 200, superimposes on the map image an icon of each user at the respective location based on the coordinate information, and displays the map image on the monitor 101. Thus, it is possible to confirm on the monitor 101 the locations of a plurality of printers, and the whereabouts of the users of a plurality of handheld devices.

Fig. 3 is an example of an instant messenger window displayed on the monitor 101. The results of the operations performed by the message processor 131 are displayed in an area A on the upper right portion of the instant messenger window. The user name of, e.g., the handheld device 300 is displayed on the upper left corner of the area A ("Hanako XXX" in Fig. 3). The messages communicated between the user of the handheld device 300 and the user of the PC 100 ("Saburo XXX" in Fig. 3) are displayed in a message display area "a" within the area A. For example, messages such as "Hanako XXX: Please send me the data." and "Saburo XXX: OK." are displayed in the message display area "a" in the order of transmission. The user of the PC 100 can input messages from a message input space provided beneath the message display area "a" and within the area A. The results of the operations performed by the destination displaying unit 133 are displayed in an area B on the left portion of the instant messenger window. For example, as shown in Fig. 3, printer IDs, viz., "Printer1" and "Printer2", and the locations, viz. "meeting room-1" and "meeting room-2", of the printers (Printer1 and Printer2) are displayed in the area B. Moreover, the user names such as "Hanako XXX" and "Saburo XXX" are also displayed in the area B along with the respective whereabouts, viz., "research room-2" and "meeting room-2", and the respective statuses, viz., "offline" and "responsive".

The results of the operations performed by the map displaying unit 134 are displayed in an area C on the lower right portion of the instant messenger window. As shown in Fig. 3, a map image with icons superimposed thereon is displayed in the area C. Each icon represents a printer or a user of a handheld device.

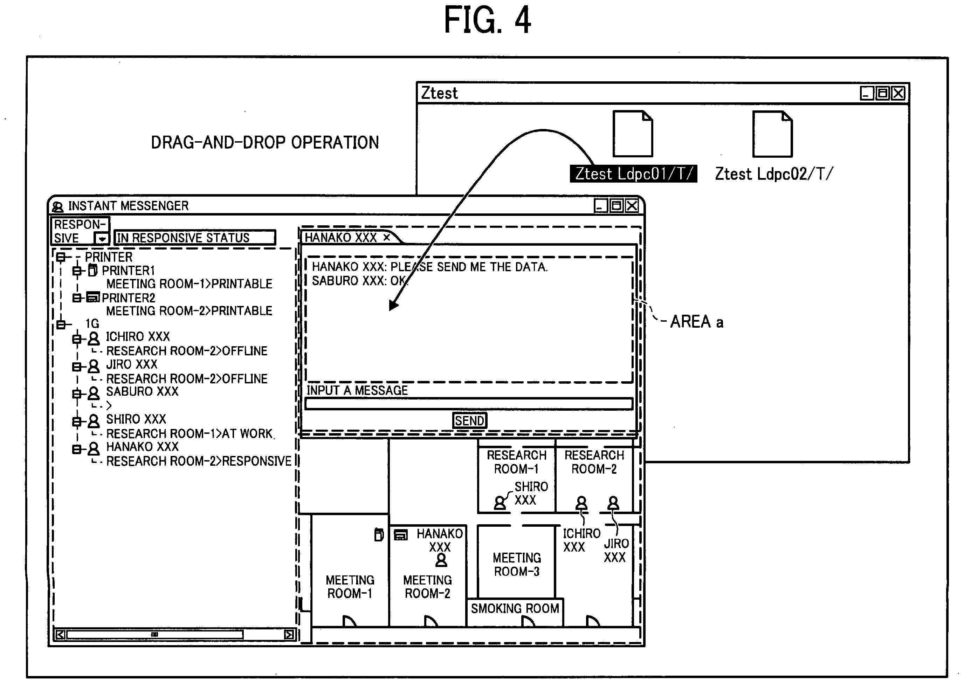

Given below is the description when the user of the PC 100 (Saburo XXX) selects image data for printing that the user of the handheld device 300 (Hanako XXX) needs. Fig. 4 is a schematic diagram for explaining an operation of dragging an icon of the image data and dropping the icon into the message display area "a". As shown in Fig. 4, the instant message window is displayed on the monitor 101 along with a "Ztest" folder that includes a plurality of icons, each corresponding to an image data file such as a "Ztest Ldpc01/T/" file and a "Ztest Ldpc02/T/" file. When the user of the PC 100 drags, e.g., the "Ztest Ldpc01/T/" file (corresponding to the image data) and drops it into the message display area '"a", the ID generating unit 132 detects the drag-and-drop operation and selects the "Ztest Ldpc01/T/" file.

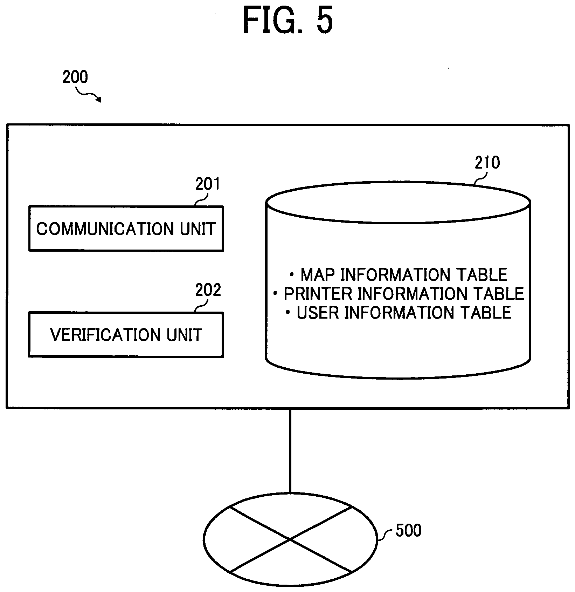

The server 200 controls message and data communication between the PC 100, the handheld device 300, and the printer 400. A computer program for data transmission-reception (hereinafter, "data transmission-reception program") stored in a ROM is executed such that the server 200 can control the message and data communication. Fig. 5 is a schematic diagram of the server 200. The server 200 includes a storage unit 210, a communication unit 201, and a verification unit 202.

The storage unit 210 can be a HDD or a memory that stores therein the map information table, the printer information table, and the user information table.

The map information table stores therein correlated information such as a unique map ID for each map image about an area in which printers can be located, a floor that the map image indicates, a range of coordinates indicating the area covered by the map image, and a file name of the map image.

The printer information table stores therein correlated information such as a printer ID for uniquely identifying each printer, a floor at which the printer is installed, a location of the printer, coordinates of the location of the printer on a map image, a destination of the printer such as an IP address or a signaling protocol (SIP) address, a printer type, a printer mode (printable, offline, or currently printing), a printing status (current status of the printer when in "currently printing" mode), and an icon file corresponding to the printer.

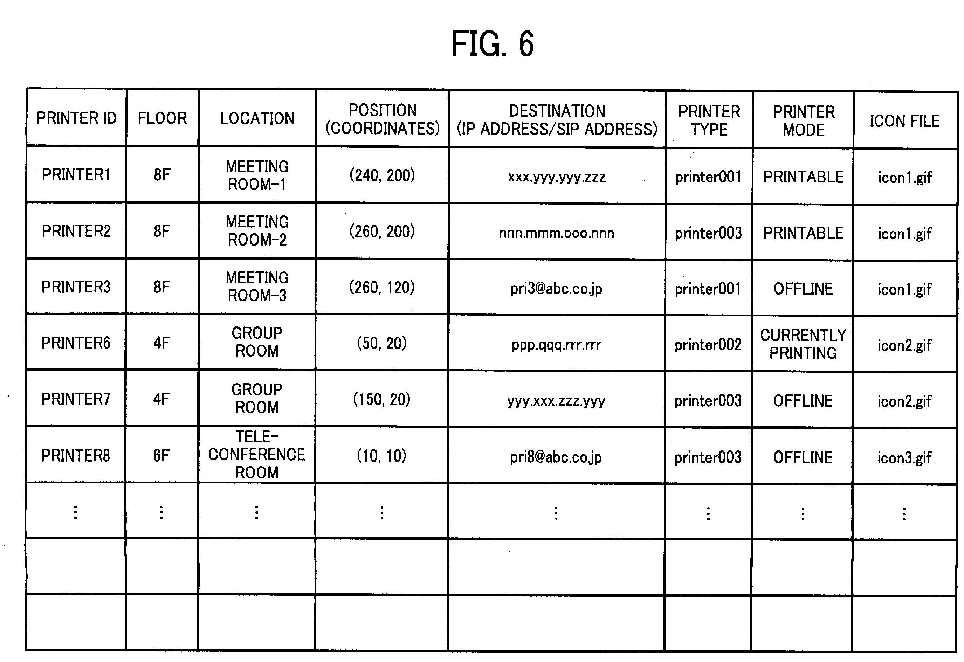

Fig. 6 is an example of a data structure of the printer information table. For example, in the case of a printer having "Printer1" as the printer ID, the printer is located at the eighth floor (8F) in the "meeting room-1", i.e., at coordinates (240, 200) on a map image. The destination of the printer is "xxx.yyy.yyy.zzz". The printer type is "printer001", while the printer mode is "printable". The icon file of the printer is "icon1.gif". Meanwhile, the format of an icon file is not limited to the abovementioned graphics interchange format (GIF format).

The user information table stores therein correlated information such as a user ID that uniquely identifies each user, a user name, coordinates of the location of the user on a map image, a destination of the user such as an email address, a telephone number of the user, a user status (offline, responsive, or at work), and a location indicating the whereabouts of the user.

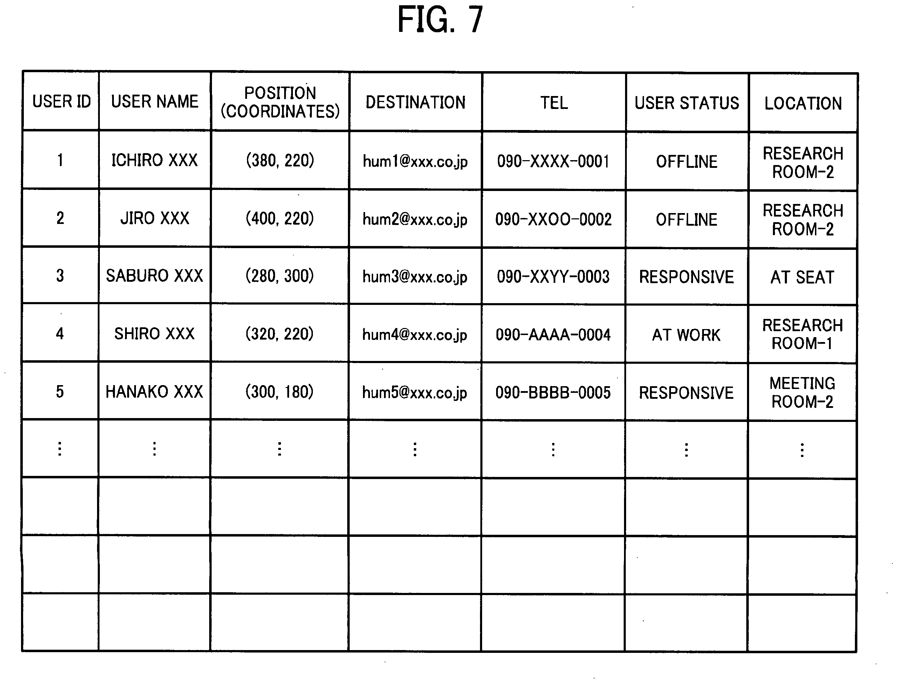

Fig. 7 is an example of a data structure of the user information table. For example, in the case of a user having "1" as the user ID and "Ichiro XXX" as the user name, the user is present at coordinates (380,220) on a map image. The email address of the user is "hum1@xxx.co.jp", while the telephone number (TEL) of the user is 090-XXXX-0001. The user status is "offline" and the user is located at the "meting room-1".

When the user of the PC 100 transmits a message to, e.g., the handheld device 300, the communication unit 201 first receives the message and the IP address of the handheld device 300, and transfers the message to the handheld device 300 only after the verification unit 202 verifies the user ID of the user of the PC 100. Similarly, when the user of the handheld device 300 transmits a message to the PC 100, the communication unit 201 first receives the message and the IP address of the PC 100, and transfers the message to the PC 100 only after the verification unit 202 verifies the user ID of the user of the handheld device 300. In addition to messages, when the user of the PC 100 transmits an image-data ID, the communication unit 201 receives an image-data ID and transfers it to the handheld device 300. Moreover, the communication unit 201 receives from the printer 400 the printing status of image data, which the user of the handheld device 300 has instructed to print, and the corresponding image-data ID, and informs the handheld device 300 as well as the PC 100 about the printing status.

The verification unit 202 verifies the user-IDs of the users of the PC 100 and the handheld device 300 by determining whether the user-IDs are registered in the user information table. As a result, the server 200 can control message and data communication only between authorized users.

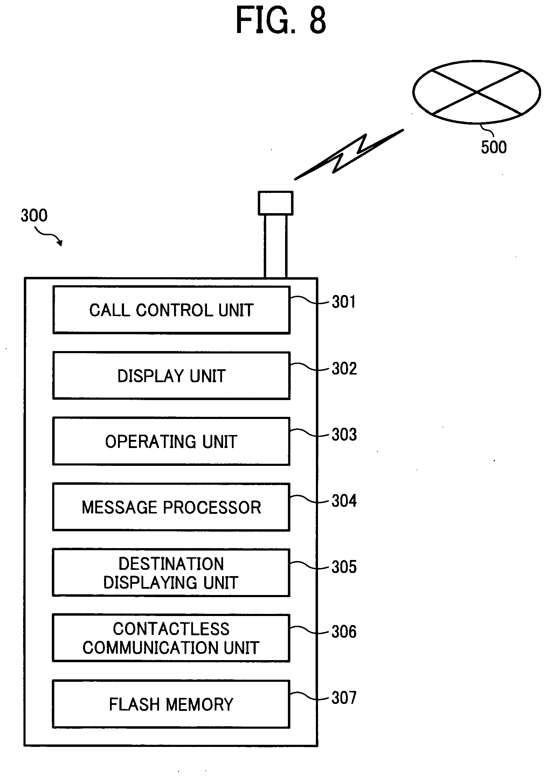

Given below is the description about the handheld device 300. The handheld device 300 communicates messages with the PC 100 and the printer 400, and displays thereon communicated messages. The handheld device 300 receives image data from the PC 100 and instructs the printer 400 to print the image data. A print instruction program stored in a ROM is executed such that the handheld device 300 can instruct the printer 400 to print image data. Similar to the instant messenger application 130 in the PC 100, the handheld device 300 also uses an instant messaging technology to enable real-time communication in the form of instant messages with the PC 100 via the network 500. Fig. 8 is a schematic diagram of the handheld device 300. The handheld device 300 includes a call control unit 301, a display unit 302, an operating unit 303, a message processor 304, a destination displaying unit 305, a contactless communication unit 306, and a flash memory 307.

The call control unit 301 controls call (telephone-conversation) function of the handheld device 300. The display unit 302 is, e.g., a liquid crystal display (LCD). The operating unit 303 are, e.g., keys and buttons. The flash memory 307 stores therein messages communicated with the PC 100 and the printer 400, and characters and images displayed on the display unit 302.

The destination displaying unit 305 displays on the display unit 302 a plurality of destination PCs and the display names (user names or screen names) of the corresponding users of the PCs (e.g., the destination: the PC 100, and the display name: Saburo XXX). Each display name displayed on the display unit 302 is linked in advance to the IP address of the corresponding PC. Thus, by specifying a display name as the destination, the IP address corresponding to the specified display name, i.e., the IP address of the corresponding PC becomes the destination for message communication. The destination displaying unit 305 obtains from the server 200 a display name corresponding to a unique user ID of a user of each PC, the IP address of the PC, the whereabouts of the user, the current status of the user, and the coordinate information about the whereabouts of the user. The destination displaying unit 305 also obtains from the server 200 a printer location corresponding to a unique printer ID of each printer, the current status of the printer, and the coordinate information about the printer location. The destination displaying unit 305 then displays on the display unit 302 the obtained display names of the users, the whereabouts of the users, and the current status of the users. Moreover, the destination displaying unit 305 selects only one printer that is located within a specified area from the location of the user of the handheld device 300, and displays the location of the selected printer and the current status of the printer on the display unit 302. Meanwhile, the IP address of each PC and the corresponding display name is stored in a memory.

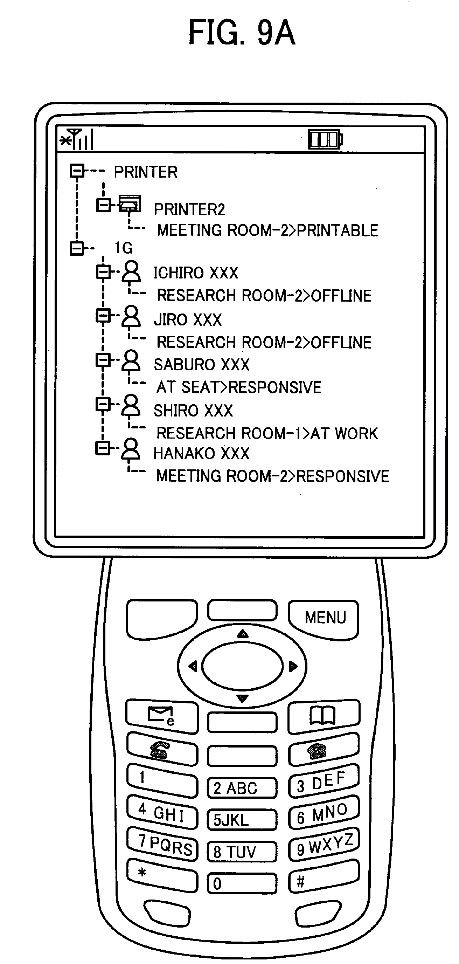

Fig. 9A is an example of a list of destinations displayed on the display unit 302. As shown in Fig. 9A, a screen resembling the area B in Fig. 3 is displayed on the display unit 302. That is, the printer ID "Printer2", the location "meeting room-2" of the printer corresponding to "Printer2", and the mode "printable" of that printer are displayed on the display unit 302. Moreover, user names such as "Ichiro XXX" and "Saburo XXX" are also displayed on the display unit 302 along with their respective whereabouts, viz., "research room-2" and "at seat", and their respective statuses, viz., "offline" and "responsive".

Thus, only one printer is displayed on the display unit 302, unlike all printers listed on the monitor 101 of the PC 100. It means that the printer displayed on the display unit 302 is located within a specified area from the location of the user of the handheld device 300.

Due to popularization of handheld devices as a part of the work style, it is difficult to determine when and from what location the user of a handheld device will need to print data. Thus, depending on the whereabouts of the user and the timing of a printing request, it is necessary to inform the user about a printer located within easily accessible distance. That is, there is no point in just displaying all printers on the handheld device of the user. According to the first embodiment, the object of informing the user about a printer, which is in a printable mode and located within a specified area from the user, is achieved by using the coordinate information about the whereabouts of the user and the location of the printer. Moreover, other criteria for informing a user about a specific printer can be the status of the printer or the access rights of the user.

When the user of the handheld device 300 inputs a message from the operating unit 303, the message processor 304 receives the message and displays it on the display unit 302. The message processor 304 then obtains the desired destination PC from among a plurality of destination PCs displayed by the destination displaying unit 305, confirms whether the PC is in a transmittable mode, obtains the display name of the PC and the IP address corresponding to the display name, and transmits the message to that IP address via the server 200. The message processor 304 can also receive messages from a plurality of PCs and printers, and display the messages on the display unit 302.

During a message communication between the handheld device 300 and a PC, the message processor 304 receives an image-data ID in the form of a message from the PC via the server 200. The image-data ID corresponds to the image data for printing needed by the user of the handheld device 300. When the user instructs a printer to print the image data, the message processor 304 receives a message regarding the printing status of the image data from the printer via the server 200, and displays the message on the display unit 302.

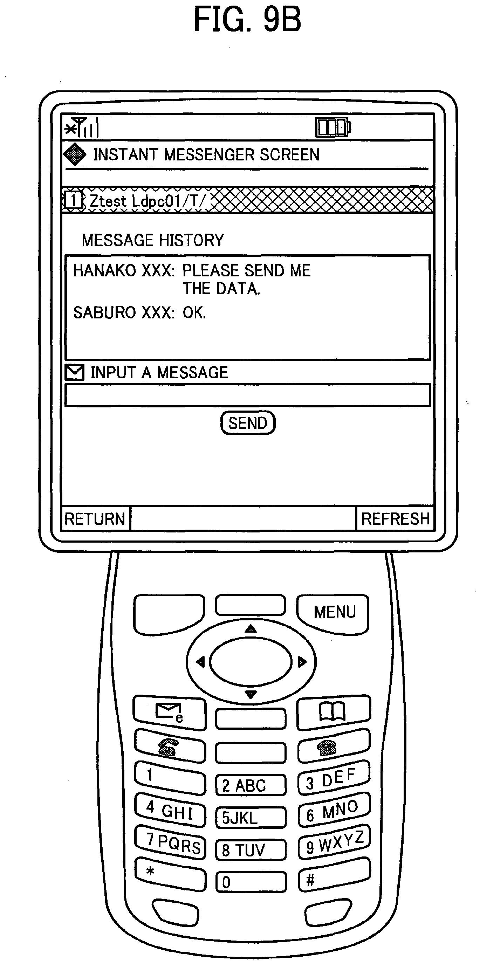

Fig. 9B is an example of an instant messenger screen displayed on the display unit 302. As shown in Fig. 9B, the "Ztest Ldpc01/T/" file received from the PC 100 is displayed on the display unit 302. Moreover, the messages communicated between the user of the handheld device 300 (Hanako XXX) and the user of the PC 100 (Saburo XXX), i.e., the messages such as "Hanako XXX: Please send me the data." and "Saburo XXX: OK." are displayed on the instant messenger screen in the order of transmission. The user of the handheld device 300 can input messages from a message input space provided in the lower portion of the instant messenger screen.

When the message processor 304 receives an image-data ID from a PC, the contactless communication unit 306 transmits the image-data ID to a printer by using FeliCa technology. That is, after the user of the handheld device 300 selects a FeliCa compatible printer, the contactless communication unit 306 displays on the display unit 302 a confirmation request for transmitting the image-data ID to the printer by using FeliCa technology. When the user of the handheld device 300 places the handheld device 300 over a FeliCa mark on the printer, the image-data ID and an instruction to print the image data corresponding to the image-data ID is transmitted to the printer. Thus, the user of the handheld device 300 can easily select a printer and request a print job by using a contactless technology.

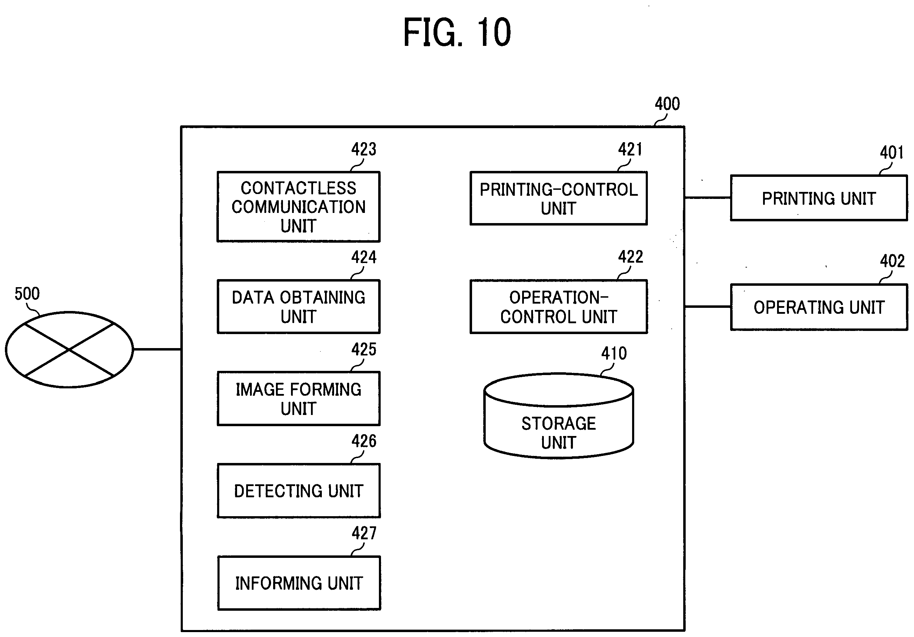

Given below is the description of the printer 400. The printer 400 receives an image-data ID and a printing instruction from a handheld device, and prints the image data corresponding to the image-data ID. A print instruction program stored in a ROM is executed such that the printer 400 can print data. Fig. 10 is a schematic diagram of the printer 400. The printer 400 includes a printing unit 401, an operating unit 402, a storage unit 410, a printing-control unit 421, an operation-control unit 422, a contactless communication unit 423, a data obtaining unit 424, an image forming unit 425, a detecting unit 426, and a informing unit 427.

The printing unit 401 prints print data generated in the printer 400 on a printing medium such as paper.

The operating unit 402 includes a LCD (not shown) and an operation panel (not shown). A user can input a plurality of instructions from the operation panel. The LCD displays thereon a plurality of screens. The LCD can be configured to be a LCD touch screen for directly receiving user input.

The storage unit 410 is a storage medium such as a HDD or a memory that stores therein image data obtained by the data obtaining unit 424 described later.

The printing-control unit 421 controls the printing unit 401 for printing the print data.

The operation-control unit 422 controls the display of screens on the LCD and the user input from the operation panel.

The contactless communication unit 423 receives an image-data ID from a handheld device by using FeliCa technology. That is, the contactless communication unit 423 receives an image-data ID when the handheld device is placed over a FeliCa mark on the printer 400.

The data obtaining unit 424 obtains image data, which corresponds to the image-data ID received by the contactless communication unit 423, from a PC, a server, or a computer over the Internet via the network 500.

The image forming unit 425 generates print data from the image data obtained by the data obtaining unit 424, and instructs the printing unit 401 to print the print data.

The detecting unit 426 detects at regular time intervals the printing status of the print data being printed by the printing unit 401.

The informing unit 427 informs the server 200 about the printing status detected by the detecting unit 426 along with the corresponding image-data ID. The server 200 then informs the printing status to the PC, which had originally transmitted the image-data ID to the server 200, and the handheld device, which had originally received the image-data ID from the server 200.

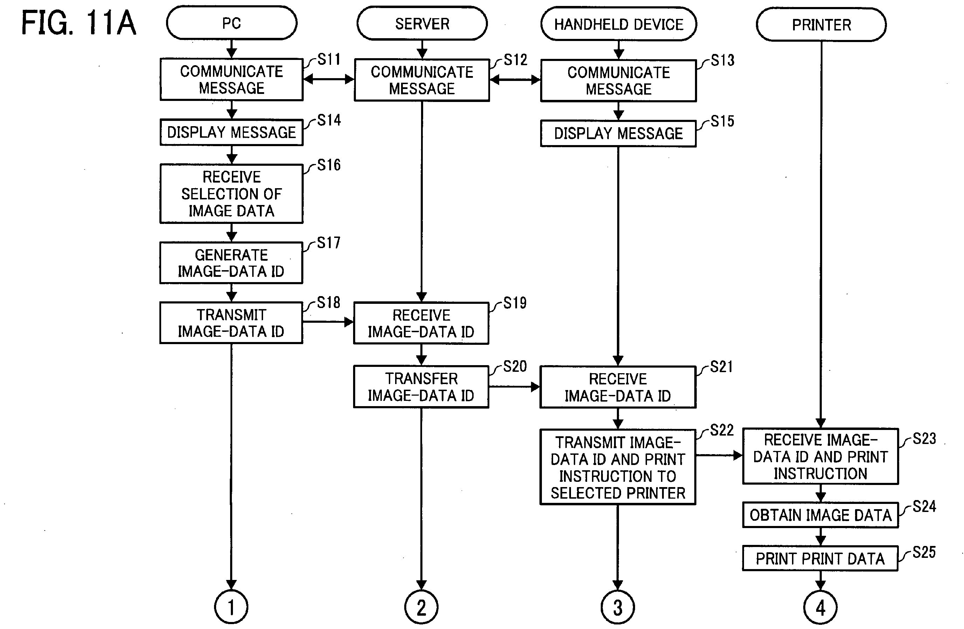

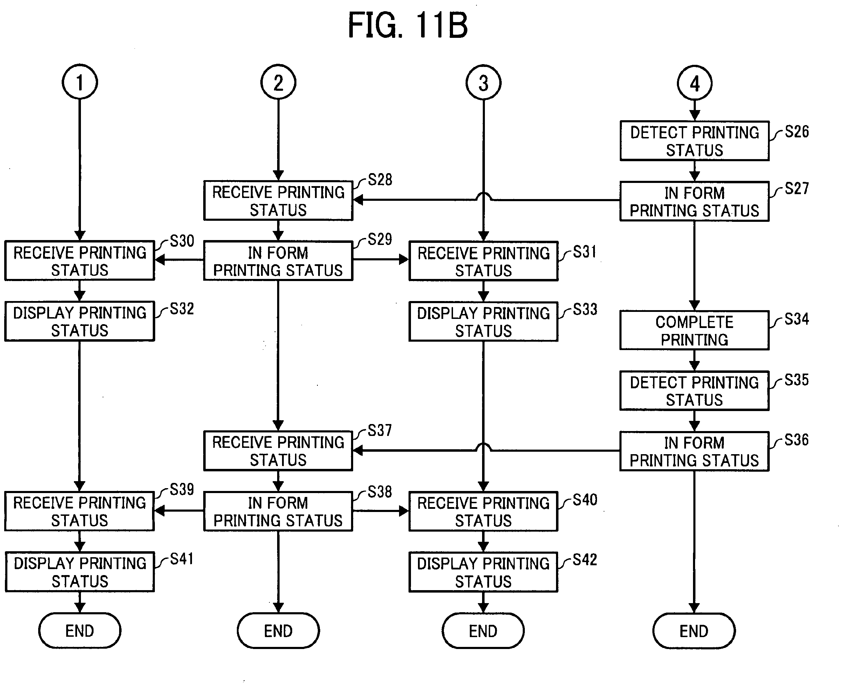

Figs. 11A and 11B are sequence diagrams for explaining the process of image formation in the image forming system according to the first embodiment.

In the case of transmitting a message from the PC 100 to the handheld device 300 by using an instant messenger, the message processor 131 first transmits a message to the server 200 along with the IP address of the handheld device 300 (step S11). The communication unit 201 transfers the message to the IP address of the handheld device 300 only after the verification unit 202 verifies the user ID of the user of the PC 100 (step S12). The message processor 304 receives the message from the communication unit 201 (step S13) and displays it on the display unit 302 (step S15).

In the case of transmitting a message from the handheld device 300 to the PC 100 by using an instant messenger, the message processor 304 first transmits a message to the server 200 along with the IP address of the PC 100 (step S13). The communication unit 201 transfers the message to the IP address of the PC 100 only after the verification unit 202 verifies the user ID of the user of the handheld device 300 (step S12). The message processor 131 receives the message from the communication unit 201 (step S11) and displays it on the monitor 101 (step S14).

In this way, the PC 100 and the handheld device 300 perform message communication via the server 200. During such message communication, when the user of the PC 100 needs to transmit an image-data ID corresponding to image data for printing to the user of the handheld device 300, following sequence of operations is performed.

When the user of the PC 100 drags an icon displayed on the monitor 101 and drops it into the message display area "a", the ID generating unit 132 detects the drag-and-drop operation and receives selection of image data corresponding to the icon (step S16). The ID generating unit 132 then generates a unique image-data ID for the image data (step S17) and stores the image-data ID in the storage unit 120. The message processer 131 reads the image-data ID from the storage unit 120 and transmits the image-data ID to the server 200 in the form of a message (step S18).

The communication unit 201 receives the image-data ID from the message processer 131 (step S19), and transfers it to the IP address of the handheld device 300 (step S20).

The message processor 304 receives the image-data ID from the communication unit 201 (step S21). When the user of the handheld device 300 selects the printer 400, the contactless communication unit 306 displays on the display unit 302 a confirmation request for transmitting the image-data ID to the printer 400. The contactless communication unit 306 transmits the image-data ID and an instruction to print the image data corresponding to the image-data ID to the printer 400 by using a contactless technology (step S22).

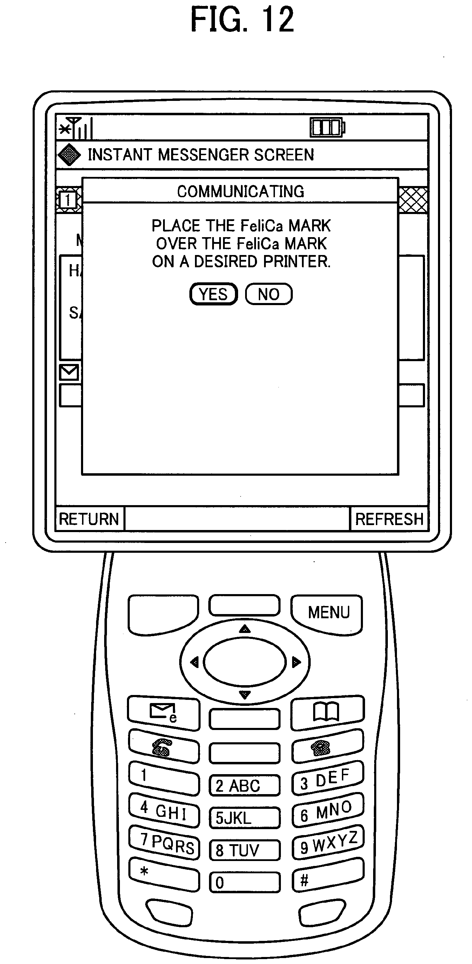

Fig. 12 is an example of a confirmation request displayed on the display unit 302 for transmitting an image-data ID to a printer. As shown in Fig 12, the confirmation request is displayed as a pop-up screen over the instant messenger screen in the display unit 302 (refer to Fig. 9B). The pop-up screen displays a message such as "Place the FeliCa mark on this handheld device over the FeliCa mark on a desired printer", along with "YES" and "NO" buttons for selection. When the user selects the "YES" button and places the handheld device 300 over the FeliCa mark on, e.g., the printer 400, the image-data ID and the instruction to print the image data corresponding to the image-data ID is transmitted to the printer 400.

The contactless communication unit 423 receives from the handheld device 300 the image-data ID and the instruction to print the image data corresponding to the image-data ID (step S23). The data obtaining unit 424 then obtains the image data corresponding to the image-data ID from the PC 100, a server, or a computer over the Internet via the network 500 (step S24). The image forming unit 425 generates print data from the image data obtained by the data obtaining unit 424, and instructs the printing unit 401 to print the print data (step S25).

The detecting unit 426 detects the printing status of the print data being printed by the printing unit 401 (step S26). The informing unit 427 informs the server 200 about the printing status detected by the detecting unit 426 along with the corresponding image-data ID (step S27).

The communication unit 201 receives the printing status of the print data and the corresponding image-data ID from the informing unit 427 (step S28), and informs the PC 100 and the handheld device 300 about the printing status (step S29).

The message processer 131 receives a message from the communication unit 201 regarding the printing status (step S30), and displays the message in the message display area "a" on the monitor 101 (step S32). The message processor 304 also receives a message from the communication unit 201 regarding the printing status (step S31), and displays the message on the display unit 302 (step S33).

The abovementioned process of detecting the printing status, transmitting the printing status to the PC 100 and the handheld device 300 via the server 200, and displaying the printing status on the monitor 101 and the display unit 302, respectively, is repeated at regular time intervals until printing of the print data is complete.

When printing of the print data is complete (step S34), the detecting unit 426 detects a "printing complete" status (step S35). The informing unit 427 then informs the server 200 about the "printing complete" status along with the corresponding image-data ID (step S36).

The communication unit 201 receives the "printing complete" status of the print data and the corresponding image-data ID (step S37), and informs the PC 100 and the handheld device 300 about the "printing complete" status (step S38).

The message processer 131 receives a message from the communication unit 201 regarding the "printing complete" status (step S39), and displays the message in the message display area "a" on the monitor 101 (step S41). The message processor 304 also receives a message from the communication unit 201 regarding the "printing complete" status (step S40), and displays the message on the display unit 302 (step S42).

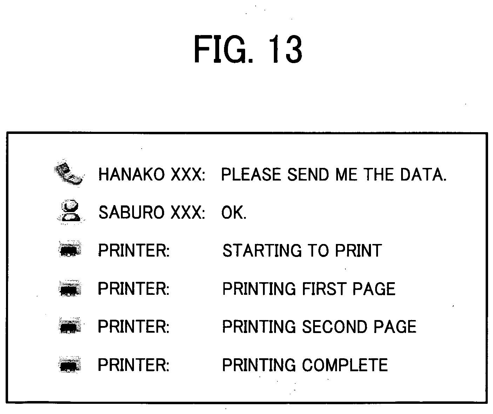

Fig. 13 is an example of messages regarding printing status displayed in the message display area "a" on the monitor 101 as well as on the display unit 302. According to the abovementioned example, after the user of the PC 100 (i.e., Saburo XXX) transmits the image-data ID needed by the user of the handheld device 300 (i.e., Hanako XXX), the messages regarding the printing status of the image data are displayed in the message display area "a" on the monitor 101 as well as on the display unit 302. The messages are transmitted by the printer 400 via the server 200. Examples of the messages are "Printer: starting to print", "Printer: printing first page", "Printer: printing complete", etc.

As described above, according to the first embodiment, in addition to the message communication between the PC 100 and the handheld device 300 via the server 200, the user of the PC 100 can transmit an image-data ID corresponding to image data for printing to the user of the handheld device 300. The users of the PC 100 and the handheld device 300 are periodically informed about the printing status of the image data being printed by the printer 400.

To sum up, a three-way communication of messages and data is possible between a plurality of PCs, a plurality of handheld devices, and a plurality of printers via a server. Based on the information about the status of various printers, a user of a PC or a handheld device can decide which printer to use for printing at a particular point of time. Moreover, only authentic users can perform message and data communication because the server verifies users before allowing the communication. In addition to message communication, a user of a PC can select an image-data ID that corresponds to image data for printing through simple operations such as a drag-and-drop operation and transmit the image-data ID to a handheld device. A user of the handheld device can select a printer and instruct the printer by using a contactless technology to print the image data.

Given below is the description of an image forming system according to a second embodiment of the present invention. As described above, according to the first embodiment, a printer informs a PC and a handheld device about the printing status of image data via a server. However, according to the second embodiment, a printer directly informs a handheld device about the printing status of image data and the handheld device in turn informs a PC about the printing status.

The image forming system according to the second embodiment includes the PC 100, the handheld device 300, the server 200, and the printer 400, each of which has an identical structure as that according to the first embodiment and can be described with reference to Figs. 2, 5, 8, and 10, respectively. Thus, the description given below is mainly regarding the features unique to the second embodiment.

As in the first embodiment, the instant messenger application 130 of the PC 100 according to the second embodiment includes the message processer 131, the ID generating unit 132, the destination displaying unit 133, and the map displaying unit 134. However, instead of receiving the printing status of image data from the printer 400 via the server 200, the message processor 131 receives the printing status of the image data from the handheld device 300. That is, first, the handheld device 300 receives the printing status of the image data directly from the printer 400. Then, the message processor 131 receives the printing status from the handheld device 300 and displays it in the message display area "a" on the monitor 101.

Regarding the server 200, the communication unit 201 does not receive the printing status from the printer 400, unlike in the case according to the first embodiment.

Regarding the handheld device 300, instead of receiving the printing status of the image data from the printer 400 via the server 200, the message processor 304 receives the printing status directly from the printer 400. The message processor 304 then informs the PC 100 about the printing status via the network 500. Thus, both the users of the handheld device 300 and the PC 100 are kept informed about the status of the printer 400. Such communication facilitates the users in making decisions about printing the image data.

Regarding the printer 400, instead of informing the server 200 about the printing status, the informing unit 427 directly informs the handheld device 300 about the printing status detected by the detecting unit 426. The handheld device 300 in turn informs the PC 100 about the printing status.

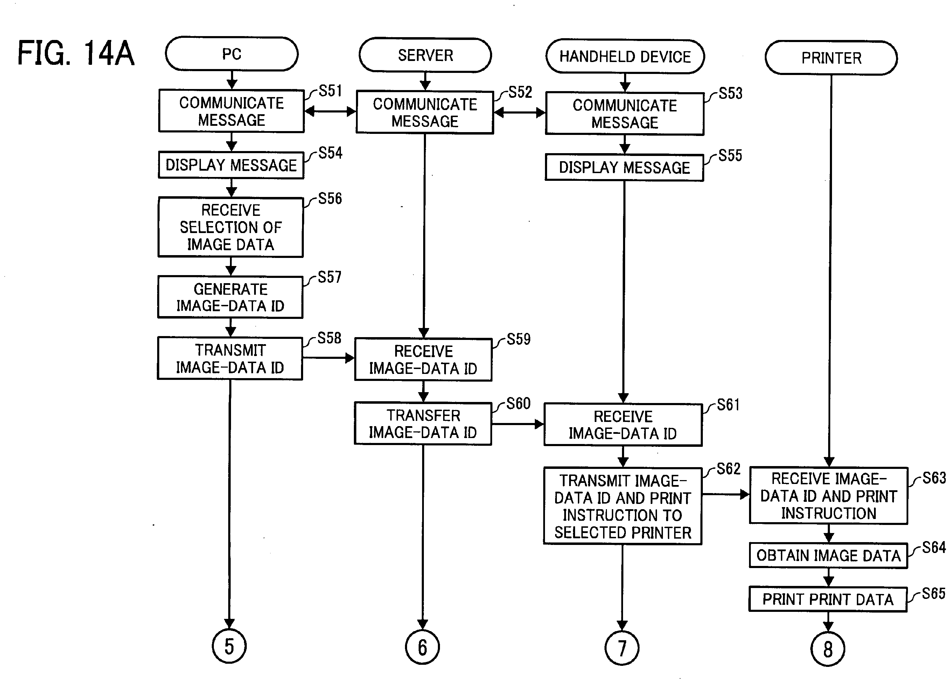

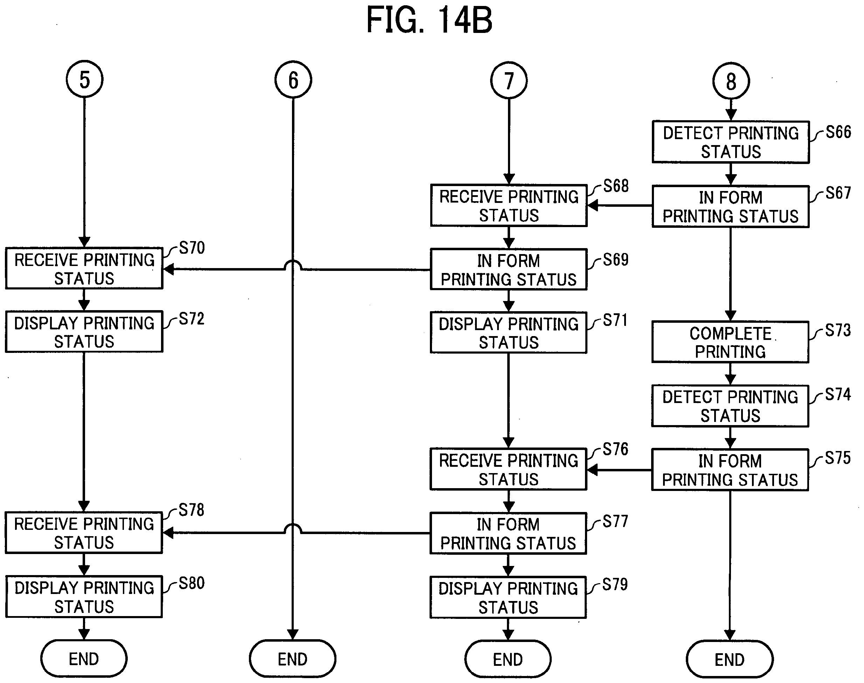

Figs. 14A and 14B are sequence diagrams for explaining the process of image formation in the image forming system according to the second embodiment.

The operation of transmitting a message from the PC 100 to the handheld device 300 via the server 200 by using an instant messenger (i.e., steps S51 to S55 in Fig. 14A) is basically similar to that previously described for the first embodiment (i.e., steps S11 to S15 in Fig. 11A). The operation from generation of a unique image-data ID to detection of the printing status of image data corresponding to the image-data ID (i.e., steps S56 to S66 in Fig. 14A and 14B) is basically similar to that previously described for the first embodiment (i.e., steps S16 to S26 in Figs. 11A and 11B). Thus, the same description (steps S51 to S66) is not repeated.

After the detecting unit 426 detects the printing status of the image data (step S66), the informing unit 427 directly informs the handheld device 300 about the printing status (step S67).

The message processor 304 receives a message regarding the printing status of the image data from the informing unit 427 (step S68), informs the PC 100 about the printing status (step S69), and displays the message on the display unit 302 (step S71).

The message processor 131 receives the message regarding the printing status form the message processor 304 (step S70), and displays the message in the message display area "a" on the monitor 101 (step S72).

The abovementioned process of detecting the printing status, transmitting the printing status first to the handheld device 300 and then to the PC 100, and displaying the printing status on the display unit 302 and the monitor 101, respectively, is repeated at regular time intervals until printing is complete.

When printing is complete (step S73), the detecting unit 426 detects a "printing complete" status (step S74). The informing unit 427 then directly informs the handheld device 300 about the "printing complete" status (step S75).

The message processor 304 receives a message regarding the "printing complete" status from the informing unit 427 (step S76), informs the PC 100 about the "printing complete" status (step S77), and displays the message on the display unit 302 (step S79).

The message processer 131 of the PC 100 receives a message from the handheld device 300 regarding the "printing complete" status (step S78), and displays the message in the message display area "a" on the monitor 101 (step S80).

As described above, according to the second embodiment, in addition to the message communication between the PC 100 and the handheld device 300 via the server 200, the user of the PC 100 can transmit an image-data ID corresponding to image data for printing to the user of the handheld device 300. The printer 400 periodically transmits to the handheld device 300 a message regarding the printing status of the image data being printed, and the handheld device in turn transmits the message to the PC 100.

To sum up, a three-way message communication is possible between a plurality of PCs, a plurality of handheld devices, and a plurality of printers via a server. Moreover, a printer directly informs a handheld device about the printing status and the handheld device then informs a PC about the same. Thus, a user of the handheld device or the PC can decide which printer to use for printing at a particular point of time. Moreover, only authentic users can perform message communication because the server verifies users before allowing the communication. In addition to message communication, a user of a PC can select an image-data ID corresponding to image data by using simple operations such as a drag-and-drop operation and transmit the image-data ID to a handheld device. A user of the handheld device can select a printer and instruct the printer by using a contactless technology to print the image data.

According to the first embodiment, a message regarding the printing status of image data printed by the printer 400 is transmitted to the PC 100 and the handheld device 300 via the server 200. On the other hand, according to the second embodiment, such a printing-status message is directly transmitted to the handheld device 300, which in turn transmits the message to the PC 100. The printing-status message can also be directly transmitted from a printer to a PC as well as a handheld device.

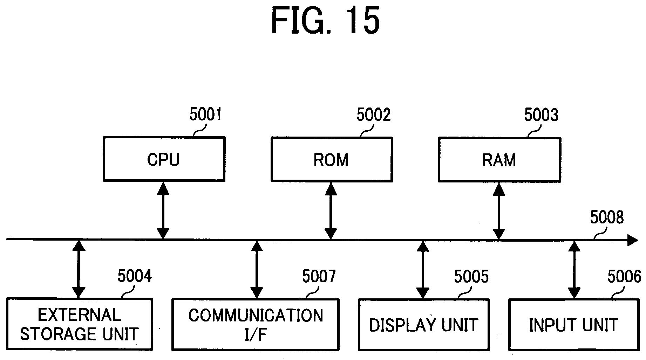

Fig. 15 is a schematic diagram of a hardware configuration of the PC 100 and the server 200 according to the first and second embodiments. Each of the PC 100 and the server 200 includes a central processing unit (CPU) 5001, a ROM 5002, a random access memory (RAM) 5003, an external storage unit 5004 such as a HDD or a compact disk (CD) drive, a display unit 5005 such as a monitor, an input unit 5006 such as a mouse or a keyboard, a communication interface (I/F) 5007, and a bus 5008 interconnecting the abovementioned components.

Meanwhile, the handheld device 300 includes a CPU, a storage unit such as a ROM and a RAM, an external storage unit such as a flash memory, a display unit such as an LCD, an input unit such as a numerical keypad, and a wireless communication interface. The handheld device 300 can be a cellular phone or a personal digital assistant (PDA).

A computer program for output-data communication (hereinafter, "output-data communication program") executed in the PC 100 and the data transmission-reception program executed in the server 200 can be provided as being stored as installable and executable files in a computer-readable storage medium such as a compact disc read-only memory (CD-ROM), a flexible disk (FD), a CD recordable (CD-R), or a digital versatile disk (DVD).

A computer program for print instruction (hereinafter, "print instruction program") executed in the handheld device 300 can be stored in a computer connected over a network such as the Internet such that the print instruction program can be downloaded as per requirement. The print instruction program can also be stored as an installable and executable file in a computer-readable storage medium such as a CD-ROM, a FD, a CD-R, or a DVD.

The output-data communication program and the data transmission-reception program can also be stored in a computer connected over a network such as the Internet such that the programs can be downloaded as per requirement. Moreover, the output-data communication program, the data transmission-reception program, and the print instruction program can be distributed over a network such as the Internet, or can be stored in the ROM in advance.

The output-data communication program includes modules for each of the display controller 110, the input controller 111, the network driver 112, the message processer 131, the ID generating unit 132, the destination displaying unit 133, and the map displaying unit 134. The CPU loads the output-data communication program from a storage medium into a main storage unit (not shown) and executes the same to implement the above units thereon.

The data transmission-reception program includes modules for each of the communication unit 201 and the verification unit 202. The CPU loads the data transmission-reception program from a storage medium into a main storage unit (not shown) and executes the same to implement the above units thereon.

The print instruction program includes modules for each of the message processor 304, the destination displaying unit 305, the contactless communication unit 306, and the flash memory 307. The CPU loads the print instruction program from a storage medium into a main storage unit (not shown) and executes the same to implement the above units thereon.

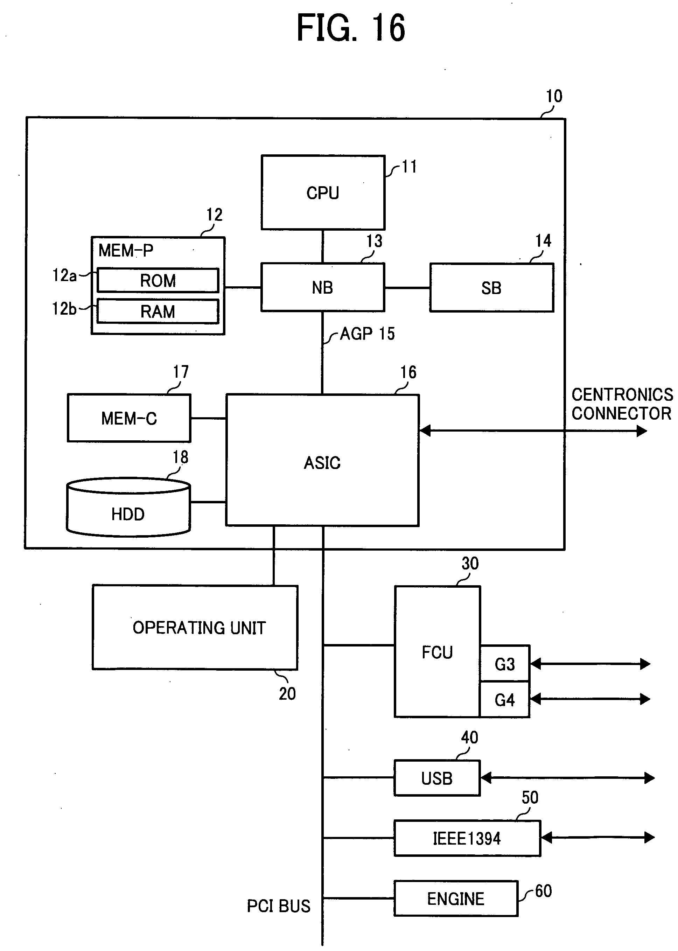

Fig. 16 is a schematic diagram of a hardware configuration of the printer 400 according to the first and second embodiments. The printer 400 includes a controller 10 and an engine 60 connected by a peripheral component interconnect (PCI) bus. The controller 10 controls the overall functioning of the printer 400 such as rendering, communication, and receipt of input from an operating unit (not shown). The engine 60 is a printer engine such as a black-and-while plotter, a one-drum color plotter, a four-drum color plotter, a scanner, or a facsimile unit. The engine 60 also performs image processing functions such as error diffusion and gamma transformation.

The controller 10 includes a CPU 11, a north bridge (NB) 13, a system memory (MEM-P) 12, a south bridge (SB) 14, an accelerated graphics port (AGP) 15, an application specific integrated circuit (ASIC) 16, a local memory (MEM-C) 17, and a HDD 18. The AGP bus connects the NB 13 and the ASIC 16. The MEM-P 12 includes a ROM 12a and a RAM 12b.

The CPU 11 controls the overall functioning of the printer 400, and includes a chipset formed by the NB 13, the MEM-P 12, and the SB 14. The CPU 11 is connected to other hardware components via the chipset.

The NB 13 connects the CPU 11 to the MEM-P 12, the SB 14, and the AGP 15. The NB 13 includes a memory controller (not shown) that controls read-write operations with respect to the MEM-P 12, a PCI mask (not shown), and an AGP target (not shown).

The ROM 12a in the MEM-P 12 is used to store computer programs or data, while the RAM 12b in the MEM-P 12 is used as an expandable memory for computer programs or data, or a rendering memory for a printer.

The SB 14 connects the NB 13 to PCI devices and peripheral devices. The SB 14 is connected to the NB 13 by a PCI bus to which a network interface unit (not shown) is also connected.

The ASIC 16 is an image processing specific integrated circuit that includes image processing specific hardware components. The ASIC 16 functions as a bridge for interconnecting the AGP 15, a PCI bus, the HDD 18, and the MEM-C 17. The ASIC 16 includes components (not shown) such as a PCI target, an AGP mask, an arbiter (ARB) that forms the core of the ASIC 16, a memory controller that controls the MEM-C 17, a plurality of direct memory access controllers (DMACs) that perform operations such as rotation of image data by using hardware logic, and a PCI unit that performs data transfer between the ASIC 16 and the engine 60 via a PCI bus. Moreover, a fax control unit (FCU) 30, a universal serial bus (USB) 40, and an Institute of Electrical and Electronics Engineers (IEEE) 1394 interface 50 are connected to the ASIC 16 via a PCI bus. Furthermore, an operating unit 20 is directly connected to the ASIC 16.

The MEM-C 17 is used as an image buffer for images to be copied or a coding buffer. The HDD 18 stores therein image data, computer programs, font data, forms, etc.

The AGP 15 is a bus interface for a graphics accelerator card arranged to speed-up graphics operations. The graphics operations can be speeded up by directly accessing the MEM-P 12 with a high throughput.

A computer program for data communication (hereinafter, "data communication program") executed in the printer 400 is stored in the ROM in advance.

The data communication program can also be provided as being stored as an installable and executable file in a computer-readable storage medium such as a CD-ROM, a FD, a CD-R, or a DVD.

The data communication program can also be stored in a computer connected over a network such as the Internet such that the data communication program can be downloaded as per requirement. The data communication program can be distributed over a network such as the Internet.

The data communication program includes modules for each of the printing-control unit 421, the operation-control unit 422, the contactless communication unit 423, the data obtaining unit 424, the image forming unit 425, the detecting unit 426, and the informing unit 427. The CPU loads the data communication program from a storage medium into a main storage unit (not shown) and executes the same to implement the above units thereon.

As set forth hereinabove, according to an embodiment of the present invention, data communication can be performed not only between information terminal devices, but also between information terminal devices and image forming apparatuses. As a result, a user of an information terminal device can be informed about the status of the image forming apparatuses, which facilitates the user in deciding which image forming apparatus to use for outputting an image at a particular point of time.

In addition to the status of the image forming apparatuses, a user of an information terminal device can also be informed about the status of other users, which facilitates the user to decide a destination for message communication.

Moreover, a user of an information terminal device can select image data through simple operations and transmit the image data to another information terminal apparatus. A user of an information terminal device can also select an image forming apparatus and instruct the image forming apparatus by using a contactless technology to output an image.

Furthermore, it is possible to inform a user of an information terminal device about an image forming apparatus located within easily accessible distance such that the user can confirm the status of the image forming apparatus and instruct it to output an image.

Although the invention has been described with respect to a specific embodiment for a complete and clear disclosure, amendments and modifications may be made. The invention is defined by the following claims.

## Claims

1. A system for data communicating, comprising:
a computer (100) configured to execute computer readable program codes,
a server (200);
an information terminal device (300); and
an image forming apparatus (400);
wherein the computer (100), server (200), information terminal device (300) and image forming apparatus (400) are connected via a network (500);
wherein the computer (100) is configured to execute the computer readable program codes for data communication that, when executed, causes the computer (100) to execute:
communicating with a plurality of destinations (300, 400) via the network (500), the destinations (300, 400) including the information terminal device (300) and the image forming apparatus (400), wherein the communicating includes transmitting a message to the information terminal device (300), and receiving a message from the information terminal device (300) or the image forming apparatus (400);
displaying the messages on a display unit (101);
receiving selection of image data to be output by the image forming apparatus (400);
generating identification information that uniquely identifies the image data;
storing the identification information in a storage unit (120), wherein
the communicating further includes:
listing the destinations (300, 400) to display a list of the destinations (300, 400) on the display unit (101);
selecting a destination (300) being an information terminal device (300) from the list of the destinations (300, 400);
reading the identification information from the storage unit (120); and
transmitting the read identification information to the selected destination;
**characterized in that**:
the listing includes receiving user status and user location of a user of the information terminal device (300) and apparatus status and apparatus location of the image forming apparatus (400) from the server (200) via the network (500), the server (200) controlling data communication over the network (500), and
the displaying includes displaying the user status, the user location, the apparatus status and the apparatus location on the display unit (101);
wherein
the communicating further includes receiving an output-status message regarding output status of the image data from the image forming apparatus (400); and
the displaying includes displaying the output-status message on the display unit (101);
wherein the image forming apparatus (400) is configured to output data;
the image forming apparatus (400) comprising:
a communication unit (423) configured to receive, in a contactless manner, identification information that uniquely identifies the data and an instruction to output the data from the information terminal device (300);
a data obtaining unit (424) configured to obtain the data via the network (500); and
an image forming unit (425) configured to form an image based on the data, and output the image;
wherein the user status, the user location, the apparatus status and the apparatus location are received by the computer (100) and displayed on the display unit (101) before receiving selection of the image data to be output;
wherein the computer (100) transmits the read identification information to the selected destination in the form of a message; and
wherein the information terminal device (300) receives the message sent by the computer (100).

2. The system according to claim 1, wherein
the displaying includes displaying a message display area (a) on the display unit (101) in which the messages are displayed, and
the receiving includes receiving, when a symbol is dragged and dropped into the message display area (a), selection of image data represented by the symbol.

3. The system according to claim 1, wherein the image forming apparatus (400) further comprises:
a detecting unit (426) configured to detect output-status of the data that is being output by the image forming unit (425); and
an informing unit (427) configured to inform the information terminal device (300) and the computer (100) about the output status via the server (200).

4. The system according to any one of claims 1 to 3, the server (200) comprising:
a communication unit (201) configured to receive from the computer (100) the message containing the read identification information to be output by the image forming apparatus (400), transmit the message containing the read identification information to the information terminal device (300), receives the message from the information terminal device (300), transmit the message to the computer (100), receives from the image forming apparatus (400) the output-status message regarding output status of the image data, and transmits the output-status message to the information terminal device (300) and the computer (100);
a storage unit (210) configured to store therein a first database in which user information that uniquely identifies each of users is registered; wherein
the storage unit (210) is further configured to store therein a second database in which apparatus information that uniquely identifies each of image forming apparatuses (400) is registered, the apparatus information being associated with apparatus status, and apparatus location,
the user information in the first database is associated with user status, and user location, and
the communication unit (201) is further configured to transmit to the information terminal device (300) and the computer (100) the user status, the user location, the apparatus status, and the apparatus location.

5. The system according to claim 4, wherein the server (200) further comprises:
an authenticating unit (202) configured to authenticate, based on the first database, a second user of the computer (100) and a first user of the information terminal device (300),
wherein
the communication unit (201) is further configured to transmit the message containing the read identification information to the information terminal device (300) after the authenticating unit (202) successfully authenticates the first user, and transmit the message to the computer (100) after the authenticating unit (202) successfully authenticates the second user.

6. A method in a system comprising a computer (100), a server (200), an information terminal device (300) and an image forming apparatus (400), said computer (100), server (200), information terminal device (300) and image forming apparatus (400) are connected via a network (500), the method comprising:
by the computer:
communicating with a plurality of destinations (300, 400) via the network (500), the destinations (300, 400) including the information terminal device (300) and the image forming apparatus (400), wherein the communicating includes transmitting a message to the information terminal device (300), and receiving a message from the information terminal device (300) or the image forming apparatus (400);
displaying the messages on a display unit (101);
receiving selection of image data to be output by the image forming apparatus (400); generating identification information that uniquely identifies the image data;
storing the identification information in a storage unit (120), wherein
the communicating further includes:
listing the destinations (300, 400) to display a list of the destinations (300, 400) on the display unit (101);
selecting a destination (300) being an information terminal device (300) from the list of the destinations (300, 400);
reading the identification information from the storage unit (120); and
transmitting the read identification information to the selected destination;
**characterized in that**:
the listing includes receiving user status and user location of a user of the information terminal device (300) and apparatus status and apparatus location of the image forming apparatus (400) from the server (200) via the network (500), the server (200) controlling data communication over the network (500), and
the displaying includes displaying the user status, the user location, the apparatus status and the apparatus location on the display unit (101);
wherein the communicating further includes receiving an output-status message regarding output status of the image data from the image forming apparatus (400), and
the displaying includes displaying the output-status message on the display unit (101);
the method further comprising:
outputting data by the image forming apparatus (400),
receiving, by a communication unit (423) of the image forming apparatus (400) in a contactless manner, identification information that uniquely identifies the data and an instruction to output the data from the information terminal device (300);
obtaining the data, by a data obtaining unit (424) of the image forming apparatus (400), via the network (500); and
forming, by an image forming unit (425) of the image forming apparatus (400), an image based on the data, and output the image,
wherein the user status, the user location, the apparatus status and the apparatus location are received by the computer (100) and displayed on the display unit (101) before receiving selection of the image data to be output;
wherein the computer (100) transmits the read identification information to the selected destination in the form of a message; and
wherein the information terminal device (300) receives the message sent by the computer (100).

7. The method according to claim 6, further comprising:
receiving, by the server (200), from the computer (100) the message containing the read identification information to be output by the image forming apparatus (400);
transmitting, by the server (200), the message containing the read identification information to the information terminal device (300);
receiving, by the server (200), the message from the information terminal device (300);
transmitting, by the server (200), the message to the computer (100);
receiving, by the server (200), user status of a user of the information terminal device (300) and apparatus status of the image forming apparatus (400) via the network (500); and
transmitting, by the server (200), the user status of the user of the information terminal device (300) and apparatus status of the image forming apparatus (400) to the computer (100).

8. The method according to claim 7, further comprising the following steps:
receiving from the image forming apparatus (400) the output-status message regarding output status of the image data, and transmitting the output-status message to the information terminal device (300) and the computer (100).

## Patentansprüche

1. System zum Kommunizieren von Daten, das Folgendes umfasst:
einen Computer (100), der konfiguriert ist, computerlesbare Programmcodes auszuführen,
einen Server (200);
eine Datenendgerätvorrichtung (300); und
eine Bilderzeugungsvorrichtung (400);
wobei der Computer (100), der Server (200), die Datenendgerätvorrichtung (300) und die Bilderzeugungsvorrichtung (400) über ein Netz (500) verbunden sind;
wobei der Computer (100) konfiguriert ist, die computerlesbaren Programmcodes für eine Datenkommunikation auszuführen, die dann, wenn sie ausgeführt werden, bewirken, dass der Computer (100) Folgendes ausführt:
Kommunizieren mit mehreren Zielen (300, 400) über das Netz (500), wobei die Ziele (300, 400) die Datenendgerätvorrichtung (300) und die Bilderzeugungsvorrichtung (400) enthalten, wobei das Kommunizieren enthält, eine Nachricht an die Datenendgerätvorrichtung (300) zu senden und eine Nachricht von der Datenendgerätvorrichtung (300) oder der Bilderzeugungsvorrichtung (400) zu empfangen;
Anzeigen der Nachrichten auf einer Anzeigeeinheit (101);
Empfangen einer durch die Bilderzeugungsvorrichtung (400) auszugebenden Auswahl von Bilddaten;
Erzeugen von Identifikationsinformationen, die die Bilddaten eindeutig identifizieren;
Speichern der Identifikationsinformationen in einer Speichereinheit (120), wobei das Kommunizieren ferner enthält:
Auflisten der Ziele (300, 400), um eine Liste der Ziele (300, 400) auf der Anzeigeeinheit (101) anzuzeigen;
Auswählen eines Ziels (300), das eine Datenendgerätvorrichtung (300) ist, aus der Liste der Ziele (300, 400);
Lesen der Identifikationsinformationen aus der Speichereinheit (120); und
Senden der Leseidentifikationsinformationen an das ausgewählte Ziel;
**dadurch gekennzeichnet, dass**:
das Auflisten enthält, einen Anwenderzustand und einen Anwenderort eines Anwenders der Datenendgerätvorrichtung (300) und einen Vorrichtungszustand und einen Vorrichtungsort der Bilderzeugungsvorrichtung (400) von dem Server (200) über das Netz (500) zu empfangen, wobei der Server (200) eine Datenkommunikation über das Netz (500) steuert, und
das Anzeigen enthält, den Anwenderzustand, den Anwenderort, den Vorrichtungszustand und den Vorrichtungsort auf der Anzeigeeinheit (101) anzuzeigen; wobei
das Kommunizieren ferner enthält, eine Ausgabezustandsnachricht bezüglich des Ausgabezustands der Bilddaten von der Bilderzeugungsvorrichtung (400) zu empfangen; und
das Anzeigen enthält, die Ausgabezustandsnachricht auf der Anzeigeeinheit (101) anzuzeigen;
wobei die Bilderzeugungsvorrichtung (400) konfiguriert ist, Daten auszugeben;
wobei die Bilderzeugungsvorrichtung (400) umfasst:
eine Kommunikationseinheit (423), die konfiguriert ist, in einer kontaktlosen Weise Identifikationsinformationen, die die Daten eindeutig identifizieren, und eine Anweisung, die Daten auszugeben, von der Datenendgerätvorrichtung (300) zu empfangen;
eine Datenerhaltungseinheit (424), die konfiguriert ist, die Daten über das Netz (500) zu erhalten; und
eine Bilderzeugungseinheit (425), die konfiguriert ist, ein Bild anhand der Daten zu erzeugen und das Bild auszugeben;
wobei der Anwenderzustand, der Anwenderort, der Vorrichtungszustand und der Vorrichtungsort durch den Computer (100) empfangen werden und auf der Anzeigeeinheit (101) angezeigt werden, bevor eine auszugebende Auswahl der Bilddaten empfangen wird;
wobei der Computer (100) die Leseidentifikationsinformationen an das ausgewählte Ziel in der Form einer Nachricht sendet; und
wobei die Datenendgerätvorrichtung (300) die durch den Computer (100) gesendete Nachricht empfängt.

2. System nach Anspruch 1, wobei
das Anzeigen enthält, einen Nachrichtenanzeigebereich (a) auf der Anzeigeeinheit (101) anzuzeigen, in dem die Nachrichten angezeigt werden, und
das Empfangen enthält, dann, wenn ein Symbol in den Nachrichtenanzeigebereich (a) gezogen und in ihm abgelegt wird, eine Auswahl der durch das Symbol repräsentierten Bilddaten zu empfangen.

3. System nach Anspruch 1, wobei die Bildererzeugungsvorrichtung (400) ferner umfasst:
eine Detektionseinheit (426), die konfiguriert ist, einen Ausgabezustand der Daten, die durch die Bilderzeugungseinheit (425) ausgegeben werden, zu detektieren; und
eine Informationseinheit (427), die konfiguriert ist, die Datenendgerätvorrichtung (300) und den Computer (100) über den Ausgabezustand über den Server (200) zu informieren.

4. System nach einem der Ansprüche 1 bis 3, wobei der Server (200) Folgendes umfasst:
eine Kommunikationseinheit (201), die konfiguriert ist, von dem Computer (100) die Nachricht zu empfangen, die die durch die Bilderzeugungsvorrichtung (400) auszugebenden Leseidentifikationsinformationen enthält, die Nachricht, die die Leseidentifikationsinformationen enthält, an die Datenendgerätvorrichtung (300) zu senden, die Nachricht von der Datenendgerätvorrichtung (300) zu empfangen, die Nachricht an den Computer (100) zu senden, von der Bilderzeugungsvorrichtung (400) die Ausgabezustandsnachricht bezüglich des Ausgabezustands der Bilddaten zu empfangen und die Ausgabezustandsnachricht an die Datenendgerätvorrichtung (300) und den Computer (100) zu senden;
eine Speichereinheit (210), die konfiguriert ist, eine erste Datenbank zu speichern, in der Anwenderinformationen, die jeden der Anwender eindeutig identifizieren, registriert sind;
wobei
die Speichereinheit (210) ferner konfiguriert ist, eine zweite Datenbank zu speichern, in der Vorrichtungsinformationen, die jede der Bilderzeugungsvorrichtungen (400) eindeutig identifizieren, gespeichert sind, wobei die Vorrichtungsinformationen einem Vorrichtungszustand und einem Vorrichtungsort zugeordnet sind,
wobei die Anwenderinformationen in der ersten Datenbank dem Anwenderzustand und dem Anwenderort zugeordnet sind und
die Kommunikationseinheit (201) ferner konfiguriert ist, den Anwenderzustand, den Anwenderort, den Vorrichtungszustand und den Vorrichtungsort an die Datenendgerätvorrichtung (300) und den Computer (100) zu senden.

5. System nach Anspruch 4, wobei der Server (200) ferner umfasst:
eine Authentifizierungseinheit (202), die konfiguriert ist, anhand der ersten Datenbank einen zweiten Anwender des Computers (100) und einen ersten Anwender der Datenendgerätvorrichtung (300) zu authentifizieren, wobei
die Kommunikationseinheit (201) ferner konfiguriert ist, die Nachricht, die die Leseidentifikationsinformationen enthält, an die Datenendgerätvorrichtung (300) zu senden, nachdem die Authentifizierungseinheit (202) den ersten Anwender erfolgreich authentifiziert hat, und die Nachricht an den Computer (100) zu senden, nachdem die Authentifizierungseinheit (202) den zweiten Anwender erfolgreich authentifiziert hat.

6. Verfahren in einem System, das einen Computer (100), einen Server (200), eine Datenendgerätvorrichtung (300) und eine Bilderzeugungsvorrichtung (400) umfasst, wobei der Computer (100), der Server (200), die Datenendgerätvorrichtung (300) und die Bilderzeugungsvorrichtung (400) über ein Netz (500) verbunden sind, wobei das Verfahren Folgendes umfasst:
durch den Computer:
Kommunizieren mit mehreren Zielen (300, 400) über das Netz (500), wobei die Ziele (300, 400) die Datenendgerätvorrichtung (300) und die Bilderzeugungsvorrichtung (400) enthalten, wobei das Kommunizieren enthält, eine Nachricht an die Datenendgerätvorrichtung (300) zu senden und eine Nachricht von der Datenendgerätvorrichtung (300) oder der Bilderzeugungsvorrichtung (400) zu empfangen;
Anzeigen der Nachrichten auf einer Anzeigeeinheit (101);
Empfangen einer durch die Bilderzeugungsvorrichtung (400) auszugebenden Auswahl von Bilddaten;
Erzeugen von Identifikationsinformationen, die die Bilddaten eindeutig identifizieren;
Speichern der Identifikationsinformationen in einer Speichereinheit (120), wobei
das Kommunizieren ferner enthält:
Auflisten der Ziele (300, 400), um eine Liste der Ziele (300, 400) auf der Anzeigeeinheit (101) anzuzeigen;
Auswählen eines Ziels (300), das eine Datenendgerätvorrichtung (300) ist, aus der Liste der Ziele (300, 400);
Lesen der Identifikationsinformationen aus der Speichereinheit (120); und
Senden der Leseidentifikationsinformationen an das ausgewählte Ziel;
**dadurch gekennzeichnet, dass**:
die Auflistung enthält, den Anwenderzustand und den Anwenderort eines Anwenders der Datenendgerätvorrichtung (300) und den Vorrichtungszustand und den Vorrichtungsort der Bilderzeugungsvorrichtung (400) von dem Server (200) über das Netz (500) zu empfangen, wobei der Server (200) die Datenkommunikation über das Netz (500) steuert, und
das Anzeigen enthält, den Anwenderzustand, den Anwenderort, den Vorrichtungszustand und den Vorrichtungsort auf der Anzeigeeinheit (101) anzuzeigen;
wobei das Kommunizieren ferner enthält, eine Ausgabezustandsnachricht bezüglich des Ausgabezustands der Bilddaten von der Bilderzeugungsvorrichtung (400) zu empfangen, und
das Anzeigen enthält, die Ausgabezustandsnachricht auf der Anzeigeeinheit (101) anzuzeigen;
wobei das Verfahren ferner Folgendes umfasst:
Ausgeben von Daten durch die Bilderzeugungsvorrichtung (400),
Empfangen durch eine Kommunikationseinheit (423) der Bilderzeugungsvorrichtung (400) in einer kontaktlosen Weise von Identifikationsinformationen, die die Daten eindeutig identifizieren, und einer Anweisung, die Daten auszugeben, von der Datenendgerätvorrichtung (300);
Erhalten der Daten durch eine Datenerhaltungseinheit (424) der Bilderzeugungsvorrichtung (400) über das Netz (500); und
Erzeugen durch eine Bilderzeugungseinheit (425) der Bilderzeugungsvorrichtung (400) eines Bilds anhand der Daten und Ausgeben des Bilds,
wobei der Anwenderzustand, der Anwenderort, der Vorrichtungszustand und der Vorrichtungsort durch den Computer (100) empfangen werden und auf der Anzeigeeinheit (101) angezeigt werden, bevor eine auszugebende Auswahl der Bilddaten empfangen wird;
wobei der Computer (100) die Leseidentifikationsinformationen an das ausgewählte Ziel in der Form einer Nachricht sendet; und
wobei die Datenendgerätvorrichtung (300) die durch den Computer (100) gesendete Nachricht empfängt.

7. Verfahren nach Anspruch 6, das ferner umfasst:
Empfangen durch den Server (200) von dem Computer (100) der Nachricht, die die durch die Bilderzeugungsvorrichtung (400) auszugebenden Leseidentifikationsinformationen (400) enthält;
Senden durch den Server (200) der Nachricht, die die Leseidentifikationsinformationen enthält, an die Datenendgerätvorrichtung (300);
Empfangen durch den Server (200) der Nachricht von der Datenendgerätvorrichtung (300);
Senden durch den Server (200) der Nachricht an den Computer (100);
Empfangen durch den Server (200) des Anwenderzustands eines Anwenders der Datenendgerätvorrichtung (300) und des Vorrichtungszustands der Bilderzeugungsvorrichtung (400) über das Netz (500); und
Senden durch den Server (200) des Anwenderzustands des Anwenders der Datenendgerätvorrichtung (300) und des Vorrichtungszustands der Bilderzeugungsvorrichtung (400) an den Computer (100).

8. Verfahren nach Anspruch 7, das ferner die folgenden Schritte umfasst:
Empfangen von der Bilderzeugungsvorrichtung (400) der Ausgabezustandsnachricht bezüglich des Ausgabezustands der Bilddaten und Senden der Ausgabezustandsnachricht an die Datenendgerätvorrichtung (300) und den Computer (100).

## Revendications

1. Système pour la communication de données, comportant :
un ordinateur (100) configuré pour exécuter des codes de programme lisibles par un ordinateur,
un serveur (200) ;
un dispositif terminal d'information (300) ; et
un appareil de formation d'image (400) ;
l'ordinateur (100), le serveur (200), le dispositif terminal d'information (300) et l'appareil de formation d'image (400) étant connectés via un réseau (500) ;
l'ordinateur (100) étant configuré pour exécuter les codes de programme lisibles par l'ordinateur pour la communication de données qui, lorsqu'ils sont exécutés, amènent l'ordinateur (100) à réaliser :
une communication avec une pluralité de destinations (300, 400) via le réseau (500), les destinations (300, 400) comprenant le dispositif terminal d'information (300) et l'appareil de formation d'image (400), la communication comprenant la transmission d'un message au dispositif terminal d'information (300), et la réception d'un message en provenance du dispositif terminal d'information (300) ou de l'appareil de formation d'image (400) ;
l'affichage des messages sur une unité d'affichage (101) ;
la réception d'une sélection de données d'image destinées à être émises en sortie par l'appareil de formation d'image (400) ;
la génération d'une information d'identification qui identifie de manière unique les données d'image ;
le stockage de l'information d'identification dans une unité de stockage (120),
la communication comprenant en outre :
l'établissement d'une liste des destinations (300, 400) pour afficher une liste des destinations (300, 400) sur l'unité d'affichage (101) ;
la sélection d'une destination (300) qui est un dispositif terminal d'information (300) dans la liste de destinations (300, 400) ;
la lecture de l'information d'identification dans l'unité de stockage (120) ; et
la transmission de l'information d'identification lue à la destination sélectionnée ;
**caractérisé en ce que** :
l'établissement de la liste comprend la réception d'un statut d'un utilisateur et d'une localisation de l'utilisateur du dispositif terminal d'information (300) et d'un statut d'appareil et d'une localisation d'appareil de l'appareil de formation d'image (400) en provenance du serveur (200) via le réseau (500), le serveur (200) commandant la communication de données via le réseau (500), et
l'affichage comprend l'affichage du statut de l'utilisateur, la localisation de l'utilisateur, le statut de l'appareil et la localisation de l'appareil sur l'unité d'affichage (101) ; où
la communication comprend en outre la réception d'un message de statut d'émission en sortie concernant le statut d'une émission en sortie des données d'image en provenance de l'appareil de formation d'image (400) ; et
l'affichage comprend l'affichage du message de statut d'émission en sortie sur l'unité d'affichage (101) ;
l'appareil de formation d'image (400) étant configuré pour émettre en sortie des données ;
l'appareil de formation d'image (400) comportant :
une unité de communication (423) configurée pour recevoir, sans contact, une information d'identification qui identifie de manière unique les données et une instruction d'émettre en sortie les données provenant du dispositif terminal d'information (300) ;
une unité d'obtention de données (424) configurée pour obtenir les données via le réseau (500) ; et
une unité de formation d'image (425) configurée pour former une image à partir des données et émettre en sortie l'image ;
où le statut de l'utilisateur, la localisation de l'utilisateur, le statut de l'appareil et la localisation de l'appareil sont reçus par l'ordinateur (100) et affichés sur l'unité d'affichage (101) avant la réception de la sélection de données d'image destinée à être émise en sortie ;
où l'ordinateur (100) transmet l'information d'identification lue à la destination sélectionnée sous la forme d'un message ; et
où le dispositif terminal d'information (300) reçoit le message envoyé par l'ordinateur (100).

2. Système selon la revendication 1, dans lequel
l'affichage comprend l'affichage d'une zone d'affichage de message (a) sur l'unité d'affichage (101) sur laquelle sont affichés les messages, et
la réception comprend, lorsqu'un symbole est glissé-déposé dans la zone d'affichage de message (a), la réception d'une sélection de données d'image représentée par le symbole.

3. Système selon la revendication 1, dans lequel l'appareil de formation d'image (400) comporte en outre :
une unité de détection (426) configurée pour détecter un statut d'émission en sortie des données en train d'être émises en sortie par l'unité de formation d'image (425) ; et
une unité d'information (427) configurée pour informer le dispositif de terminal d'information (300) et l'ordinateur (100) du statut d'émission en sortie via le serveur (200) ;

4. Système selon l'une quelconque des revendications 1 à 3, le serveur (200) comportant :
une unité de communication (201) configurée pour recevoir, en provenance de l'ordinateur (100), le message contenant l'information d'identification lue destinée à être émise en sortie par l'appareil de formation d'image (400), transmettre le message contenant l'information d'identification lue au dispositif terminal d'information (300), recevoir le message en provenance du dispositif terminal d'information (300), transmettre le message à l'ordinateur (100), recevoir en provenance de l'appareil de formation d'image (400) le message de statut d'émission en sortie concernant le statut d'émission en sortie des données d'image, et transmettre le message de statut d'émission en sortie au dispositif terminal d'information (300) et à l'ordinateur (100) ;
une unité de stockage (210) configurée pour stocker une première base de données dans laquelle sont enregistrées des informations d'utilisateur qui identifient de manière unique chacun des utilisateurs ; où
l'unité de stockage (210) est en outre configurée pour stocker une seconde base de données dans laquelle sont enregistrées des informations d'appareil qui identifient de manière unique chacun des appareils de formation d'image (400), les informations d'appareil étant associées au statut de l'appareil et à la localisation de l'appareil,
les informations d'utilisateur dans la première base de données sont associées avec le statut de l'utilisateur et la localisation de l'utilisateur, et
l'unité de communication (201) est en outre configurée pour transmettre le statut de l'utilisateur, la localisation de l'utilisateur, le statut de l'appareil et la localisation de l'appareil au dispositif terminal d'information (300) et à l'ordinateur (100).

5. Système selon la revendication 4, où le serveur (200) comporte en outre :
une unité d'authentification (202) configurée pour authentifier un second utilisateur de l'ordinateur (100) et un premier utilisateur du dispositif terminal d'information (300), en se fondant sur la première base de données,
où
l'unité de communication (201) est en outre configurée pour transmettre le message contenant l'information d'identification lue au dispositif terminal d'information (300) après que l'unité d'authentification (202) a authentifié avec succès le premier utilisateur, et transmettre le message à l'ordinateur (100) après que l'unité d'authentification (202) a authentifié avec succès le second utilisateur.

6. Procédé dans un système comportant un ordinateur (100), un serveur (200), un dispositif terminal d'information (300) et un appareil de formation d'image (400), lesdits ordinateur (100), serveur (200), dispositif terminal d'information (300) et appareil de formation d'image (400) étant connectés via un réseau (500) ; le procédé comportant les étapes suivantes, réalisées par l'ordinateur, consistant à :
communiquer avec une pluralité de destinations (300, 400) via le réseau (500), les destinations (300, 400) comprenant le dispositif terminal d'information (300) et l'appareil de formation d'image (400), la communication comprenant la transmission d'un message au dispositif terminal d'information (300), et la réception d'un message en provenance du dispositif terminal d'information (300) ou de l'appareil de formation d'image (400) ;
afficher les messages sur une unité d'affichage (101) ;
recevoir une sélection de données d'image destinées à être émises en sortie par l'appareil de formation d'image (400) ;
générer une information d'identification qui identifie de manière unique les données d'image ;
stocker l'information d'identification dans une unité de stockage (120),
la communication comprenant en outre les étapes consistant à :
lister les destinations (300, 400) pour afficher une liste des destinations (300, 400) sur l'unité d'affichage (101) ;
sélectionner une destination (300) qui est un dispositif terminal d'information (300) dans la liste de destinations (300, 400) ;
lire l'information d'identification dans l'unité de stockage (120) ; et
transmettre l'information d'identification lue à la destination sélectionnée ;
**caractérisée en ce que** :
l'établissement de la liste comprend la réception d'un statut d'un utilisateur et d'une localisation de l'utilisateur du dispositif terminal d'information (300) et d'un statut d'appareil et d'une localisation d'appareil de l'appareil de formation d'image (400) en provenance du serveur (200) via le réseau (500), le serveur (200) commandant la communication de données via le réseau (500), et
l'affichage comprend l'affichage du statut de l'utilisateur, la localisation de l'utilisateur, le statut de l'appareil et la localisation de l'appareil sur l'unité d'affichage (101) ; où
la communication comprend en outre la réception d'un message de statut d'émission en sortie concernant le statut d'une émission en sortie des données d'image en provenance de l'appareil de formation d'image (400) ; et
l'affichage comprend l'affichage du message de statut d'émission en sortie sur l'unité d'affichage (101) ;
le procédé comportant en outre :
l'émission en sortie des données par l'appareil de formation d'image (400),
la réception, sans contact, par une unité de communication (423) de l'appareil de formation d'image (400), d'une information d'identification qui identifie de manière unique les données et d'une instruction d'émettre en sortie les données provenant du dispositif terminal d'information (300) ;
l'obtention des données, par une unité d'obtention de données (424) de l'appareil de formation d'image (400), via le réseau (500) ; et
la formation, par une unité de formation d'image (425) de l'appareil de formation d'image (400), d'une image à partir des données et l'émission en sortie de l'image ;
où le statut de l'utilisateur, la localisation de l'utilisateur, le statut de l'appareil et la localisation de l'appareil sont reçus par l'ordinateur (100) et affichés sur l'unité d'affichage (101) avant la réception de la sélection de données d'image destinée à être émise en sortie ;
où l'ordinateur (100) transmet l'information d'identification lue à la destination sélectionnée sous la forme d'un message ; et
où le dispositif terminal d'information (300) reçoit le message envoyé par l'ordinateur (100).

7. Procédé selon la revendication 6, comportant en outre :
la réception, par le serveur (200), en provenance de l'ordinateur (100), du message contenant l'information d'identification lue destinée à être émise en sortie par l'appareil de formation d'image (400) ;
la transmission, par le serveur (200), du message contenant l'information d'identification lue au dispositif terminal d'information (300) ;
la réception, par le serveur (200), du message provenant du dispositif terminal d'information (300) ;
la transmission, par le serveur (200), du message à l'ordinateur (100) ;
la réception, par le serveur (200), du statut d'utilisateur d'un utilisateur du dispositif terminal d'information (300) et le statut d'appareil de l'appareil de formation d'image (400) via le réseau (500) ; et
la transmission, par le serveur (200), du statut d'utilisateur de l'utilisateur du dispositif terminal d'information (300) et le statut d'appareil de l'appareil de formation d'image (400) à l'ordinateur (100).

8. Procédé selon la revendication 7, comportant en outre les étapes suivantes :
recevoir en provenance de l'appareil de formation d'image (400) le message de statut d'émission en sortie concernant le statut d'émission en sortie des données d'image, et transmettre le message de statut d'émission en sortie au dispositif terminal d'information (300) et à l'ordinateur (100).
